(19) **Europäisches Patentamt / European Patent Office / Office européen des brevets**

(11) **EP 2 959 610 B1**

(12) **FASCICULE DE BREVET EUROPEEN**

(45) Date de publication et mention
de la délivrance du brevet:
**09.10.2019 Bulletin 2019/41**

(21) Numéro de dépôt: **14712699.9**

(22) Date de dépôt: **20.02.2014**

(51) Int Cl.:
*H04L 25/03* $^{(2006.01)}$   *H04L 27/26* $^{(2006.01)}$
*H04B 7/08* $^{(2006.01)}$

(86) Numéro de dépôt international:
**PCT/FR2014/000041**

(87) Numéro de publication internationale:
**WO 2014/128369 (28.08.2014 Gazette 2014/35)**

(54) **PROCÉDÉ DE DÉMODULATION D'UN SIGNAL**

SYSTEM ZUR DEMODULATION EINES SIGNALS

SIGNAL DEMODULATION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.02.2013 FR 1351578**

(43) Date de publication de la demande:
**30.12.2015 Bulletin 2015/53**

(73) Titulaire: **AIRBUS DS SAS**
**78990 Elancourt (FR)**

(72) Inventeurs:
 • **MEGE Philippe**
   **F-92340 Bourg La Reine (FR)**
 • **MARTINOD Laurent**
   **F-78150 Le Chesney (FR)**

(74) Mandataire: **Cabinet Camus Lebkiri**
   **25 rue de Maubeuge**
   **75009 Paris (FR)**

(56) Documents cités:
   EP-A1- 1 530 333    FR-A1- 2 924 884
   FR-A1- 2 924 884    US-A1- 2003 142 755

   • ZHIQIANG ZHOU ET AL: "Performance analysis
     of FFH/MFSK receivers with noise-normalisation
     combining over Nakagami-m fading channels
     with partial-band jamming", EUROPEAN
     TRANSACTIONS ON TELECOMMUNICATIONS,
     WILEY & SONS, CHICHESTER, GB, vol. 21, no. 6,
     1 octobre 2010 (2010-10-01), pages 526-531,
     XP001558450, ISSN: 1124-318X, DOI:
     10.1002/ETT.1420
   • SIAVASH M ALAMOUTI: "A Simple Transmit
     Diversity Technique for Wireless
     Communications", IEEE JOURNAL ON
     SELECTED AREAS IN COMMUNICATIONS, IEEE
     SERVICE CENTER, PISCATAWAY, US, vol. 16,
     no. 8, 1 octobre 1998 (1998-10-01), XP011054845,
     ISSN: 0733-8716

**Description**

**Domaine technique**

La présente invention concerne un procédé de démodulation d'un signal.

Elle concerne également un équipement récepteur multi-antennes et un programme d'ordinateur correspondant.

Le domaine de l'invention est celui de l'encodage de données numériques, destinées à être transmises notamment en présence d'un bruit de transmission, et du décodage desdites données numériques après transmission.

L'invention concerne plus particulièrement mais de manière non limitative le domaine de l'optimisation de la transmission de données numériques, par exemple via un réseau radio à large bande.

**Etat de la technique**

Un récepteur multi-antennes comprend au moins deux antennes de réception afin de recevoir des répliques d'un même signal émis, introduisant ainsi une diversité supplémentaire ayant pour effet d'améliorer la qualité de la réception. La diversité supplémentaire apportée est soit une diversité spatiale si les antennes sont suffisamment espacées, soit une diversité de polarisation si les antennes sont colocalisées et polarisées de façons différentes, soit à la fois une part de l'un et de l'autre de ces deux types de diversité.

L'invention se rapporte plus particulièrement aux systèmes de transmission multiporteuses, par exemple de type à multiplexage par division du spectre en fréquences orthogonales (on peut parler d'OFDM, pour l'anglais Orthogonal Frequency Division Multiplexing). Cette transmission multiporteuses apporte une diversité fréquentielle indépendante de la diversité spatiale et/ou de polarisation apportée par l'utilisation de plusieurs antennes en réception.

Ce type de transmission est de plus en plus fréquemment utilisé. Il a notamment été adopté dans les systèmes LTE (« Long Term Evolution »), TEDS (« TETRA Enhanced Data Service »), DAB (« Digital Audio Broadcasting ») et DVB-T (« Digital Video Broadcasing-Terrestrial »).

Dans les systèmes de transmission OFDM, les données sont en général organisées en trames. Dans chaque trame, certains symboles, répartis dans le plan temps-fréquence sont insérés parmi les informations utiles destinées au récepteur. Ces symboles, appelés "symboles pilotes" sont connus de l'émetteur et du récepteur. Ils sont généralement utilisés à des fins de synchronisation et d'estimation du canal de propagation.

Du bruit et des interférences subis par le signal au cours de sa propagation entre l'émetteur et le récepteur dégradent la réception du signal. Un traitement insuffisant du bruit et des interférences entraîne alors un taux d'erreur de démodulation et de décodage élevé.

Conventionnellement, le bruit et les interférences sont traités en comparant un signal résultant de la combinaison des signaux reçus par les antennes du récepteur à une estimée du signal émis. Cette estimée du signal émis peut être connue a priori du récepteur en utilisant par exemple les symboles pilotes. L'estimée du signal émis peut aussi être obtenue par un traitement préalable des signaux reçus sur les différentes antennes, par exemple au moyen d'une technique connue sous le nom de démodulation de signal à combinaison maximale de rapport signal (on peut parle de MRC, pour l'anglais "Maximum Ratio Combining").

On connaît la demande de brevet FR 11 61062 qui décrit un procédé de réduction d'interférences. Bien que le procédé de réduction d'interférences décrit dans ce document soit plus performant que les procédés conventionnels de réduction d'interférences dans le cas de signaux reçus bruités par de fortes interférences, le procédé peut ne pas être performant dans certain cas de figure dans lesquels le bruit des signaux reçus contient peu d'interférence.

Brevet FR 2924884 décrit la réduction des interférences dans un système à plusieurs porteuses avec réception en diversité. Les signaux reçus d'au moins deux antennes r1, r2 sont pondérés par des vecteurs v1, v2 ayant des coefficients inconnus. une estimation du signal émis d est pondérée par le vecteur v ayant un coefficient inconnu; la différence suivante est calculée: r1 * v1 + r2 * v2-r * v; une fonction de la différence est minimisée et les coefficients des vecteurs v1, v2 et v sont estimés.

Le but de la présente invention est de résoudre au moins ce problème posé par l'état de la technique.

**Exposé de l'invention**

L'invention est définie par les revendications indépendantes. D'autres modes de réalisation sont définis par les revendications dépendantes.

On atteint un tel objectif avec un procédé de démodulation d'un signal dans un récepteur comprenant au moins deux antennes recevant chacune un signal transmis à travers un canal de propagation radioélectrique associé, les signaux reçus correspondant à un même signal émis comprenant des trames de symboles réparties en temps et en fréquence dans lesquelles certains symboles, dits symboles pilotes, sont connus du récepteur, ledit procédé comprenant des étapes de :

- blanchiment de bruit pour former deux signaux combinés dont les bruits sont indépendants ;
- normalisation des bruits des signaux combinés pour former deux signaux dont les bruits sont indépendants et de normes moyennes égales ;
- démodulation de signal à combinaison maximale de rapport signal à bruit des deux signaux à bruit indépendants et de normes moyennes égales

caractérisé en ce que la première étape de blanchiment de bruit pour former les deux signaux combinés comprend des sous-étapes de :

- pondération de chacun des signaux reçus avec de premiers vecteurs de pondération respectifs associés à une antenne respective du récepteur, le signal associé à la première antenne étant pondéré par un vecteur $w_1$ et le signal associé à la deuxième antenne étant pondéré par un vecteur $w_2$,
- combinaison des signaux reçus pondérés pour former un premier signal combiné ($c_1$),
- pondération d'un signal de référence comprenant lesdits symboles pilotes avec un autre vecteur de pondération ($w_d$),
- comparaison du premier signal combiné et du signal de référence pondéré pour former une erreur ($\varepsilon$), et
- détermination des vecteurs de pondération ($w_1$, $w_2$ et $w_d$) à l'aide du critère du maximum a posteriori en maximisant la probabilité de réalisation desdits vecteurs de pondération conditionnellement à l'erreur obtenue,
- pondération de chaque signal reçu avec des deuxièmes vecteurs de pondération, le signal reçu sur la première antenne étant pondéré par le conjugué du vecteur complexe $w_2$ et le signal reçu sur la première antenne étant pondéré par l'opposé du conjugué du vecteur complexe $w_1$,
- combinaison des signaux reçus pondérés par les deuxièmes vecteurs de pondération pour former un deuxième signal combiné ($c_2$).

On entend par symbole pilote tout symbole connu du récepteur, notamment à la fois les symboles pilotes tels que désignés dans les normes des systèmes OFDM connus comme LTE et TEDS, et/ou les symboles de synchronisation et/ou les symboles déjà démodulés et décidés par le récepteur dans une étape antérieure de traitement.

Grâce à l'utilisation de l'approche du maximum a posteriori (on peut parler de MAP, pour Maximum A Posteriori), la présente invention permet de réduire de manière optimale le niveau des interférences dans un récepteur multi-antennes et d'améliorer ainsi le rapport signal sur bruit plus interférences (on peut parler de SINR, pour l'anglais Signal to Interference plus Noise Ratio).

La méthode décrite ci-dessus permet d'obtenir deux signaux $c_1$ et $c_2$ dont les bruits sont orthogonaux entre eux. Le signal $c_1$ a un niveau d'interférence réduit de manière optimale et le signal $c_2$ dont le bruit est orthogonal sur chaque symbole a donc un niveau d'interférence maximal. Aucune information n'est perdue lorsqu'on considère cette combinaison.

Grâce à l'utilisation de l'approche à combinaison maximale de rapport signal à bruit (Maximum Ratio Combining ou MRC, en anglais) dans une combinaison de signaux telle qu'elle vient d'être décrite, i.e. de deux signaux ayant l'un un bruit dont le niveau d'interférence est réduit de manière optimale, l'autre un bruit comportant un niveau d'interférence maximal, et à la normalisation du bruit de ces deux signaux, le procédé proposé répond au problème soulevé par l'état de l'art.

Ainsi, le procédé est performant dans l'ensemble des cas de figures, y compris lorsque le bruit des signaux reçus contient peu d'interférence.

Dans un mode de réalisation préféré, les coefficients respectifs ($\alpha_1$ et $\alpha_2$) du canal vu par le signal utile associé à une antenne respective du récepteur et utilisés dans l'étape de démodulation de signal à combinaison maximale de rapport signal à bruit des deux signaux, r' et r'', obtenus à l'issue de l'étape de blanchiment du bruit, peuvent être déterminés à l'aide du critère du maximum a posteriori en maximisant la probabilité de réalisation du canal ($\alpha_1$ et $\alpha_2$) conditionnellement à l'erreur présente d'une part dans le signal $c_1$ et d'autre part dans le signal $c_2$, en prenant en compte le canal de propagation vu dans le signal $c_1$ et dans le signal $c_2$.

De préférence, l'étape de détermination de l'étape de blanchiment peut comprendre des sous-étapes de :

- calcul d'une matrice de covariance $\mathbf{G}_B$ du canal de propagation ;
- calcul d'une matrice de covariance $\mathbf{G}_D$ du produit, symbole par symbole, de deux canaux de propagation ; et
- détermination des vecteurs de pondération à l'aide des matrices de covariance $\mathbf{G}_B$ et $\mathbf{G}_D$.

En effet, les vecteurs de pondération sont homogènes au canal de propagation. Les matrices de covariance $\mathbf{G}_B$ et $\mathbf{G}_D$ permettent de représenter les contraintes temporelles et fréquentielles de ce canal.

De plus, l'étape de détermination de l'étape de blanchiment peut en outre comprendre une sous-étape de décomposition de la matrice de covariance $\mathbf{G}_B$ en vecteurs propres selon la relation $\mathbf{G}_B = \mathbf{C}_B \Lambda_B \mathbf{C}_B{}^H$ dans laquelle $\mathbf{C}_B$ est une matrice de vecteurs propres de la matrice $\mathbf{G}_B$ et $\Lambda_B$ est une matrice diagonale comprenant des valeurs propres associées aux vecteurs propres de la matrice $\mathbf{G}_B$ et une sous-étape de décomposition de la matrice de covariance $\mathbf{G}_D$ en vecteurs propres selon la relation $\mathbf{G}_D = \mathbf{C}_D A_D \mathbf{C}_D{}^H$ dans laquelle $\mathbf{C}_D$ est une matrice de vecteurs propres de la matrice $\mathbf{G}_D$ et $\Lambda_D$ est une matrice diagonale comprenant des valeurs propres associées aux vecteurs propres de la matrice $\mathbf{G}_D$.

Ces décompositions permettent de simplifier les calculs des vecteurs de pondération.

Avantageusement, l'étape de détermination de l'étape de blanchiment peut en outre comprendre une sous-étape d'extraction d'une matrice $\mathbf{C}'_B$ à partir de la matrice $\mathbf{C}_B$ et d'une matrice $\mathbf{\Lambda}'_B$ à partir de la matrice $\Lambda_B$, la matrice $\mathbf{\Lambda}'_B$ comprenant un nombre déterminé $n_B$' de valeurs propres de $\Lambda_B$ et la matrice $\mathbf{C}'_B$ comprenant les vecteurs propres associés à ces $n_B$' valeurs propres, et une sous-étape d'extraction d'une matrice $\mathbf{C}'_D$ à partir de la matrice $\mathbf{C}_D$ et d'une matrice $\mathbf{\Lambda}'_D$ à partir de la matrice $\Lambda_D$, la matrice $\mathbf{\Lambda}'_D$ comprenant un nombre déterminé $n_D$' de valeurs propres de $\Lambda_D$ et la matrice $\mathbf{C}'_D$ comprenant les vecteurs propres associés à ces $n_D$' valeurs propres, les vecteurs de pondération étant alors déterminés à l'aide des matrices de vecteurs propres $\mathbf{C}'_B$ et $\mathbf{C}'_D$ et de valeurs propres $\mathbf{\Lambda}'_B$ et $\mathbf{\Lambda}'_D$.

De préférence, les $n'_B$ valeurs propres retenues sont les plus grandes valeurs propres de la matrice $\Lambda_B$ et les $n'_D$ valeurs propres retenues sont les plus grandes valeurs propres de la matrice $\Lambda_D$.

Cela permet de réduire la complexité du calcul des vecteurs de pondération tout en minimisant la perte de performances grâce au fait que les vecteurs propres conservés dans les matrices $\mathbf{C}'_B$ et $\mathbf{C}'_D$ représentent une grande part de l'énergie, représentée par la somme des valeurs propres conservées dans les matrices $\mathbf{\Lambda}'_B$ et $\mathbf{\Lambda}'_D$.

De préférence, $n'_B$ et $n'_D$ sont inférieurs ou égaux au nombre de symboles pilotes dans chaque trame.

De plus, la matrice de covariance $\mathbf{G}_B$ peut être le produit de Kronecker d'une matrice $\mathbf{G}_{B,T}$ de covariance dans le domaine temporel et d'une matrice $\mathbf{G}_{B,F}$ de covariance dans le domaine fréquentiel et la matrice de covariance $\mathbf{G}_D$ est le produit de Kronecker d'une matrice $\mathbf{G}_{D,T}$ de covariance dans le domaine temporel et d'une matrice $\mathbf{G}_{D,F}$ de covariance dans le domaine fréquentiel et l'étape de détermination (28) peut comprendre les sous-étapes de :

- décomposition des matrices $\mathbf{G}_{B,T}$ et $\mathbf{G}_{B,F}$ de covariance en vecteurs propres selon les relations $\mathbf{G}_{B,T} = \mathbf{C}_{B,T} \Lambda_{B,T} \mathbf{C}_{B,T}{}^H$ et $\mathbf{G}_{B,F} = \mathbf{C}_{B,F} \Lambda_{B,F} \mathbf{C}_{B,F}{}^H$, dans lesquelles :

    - $\mathbf{C}_{B,T}$ est une matrice de vecteurs propres de la matrice $\mathbf{G}_{B,T}$;
    - $\Lambda_{B,T}$ est une matrice diagonale comprenant des valeurs propres associées aux vecteurs propres de la matrice $\mathbf{G}_{B,T}$;
    - $\mathbf{C}_{B,F}$ est une matrice de vecteurs propres de la matrice $\mathbf{G}_{B,F}$ ; et
    - $\Lambda_{B,F}$ est une matrice diagonale comprenant des valeurs propres associées aux vecteurs propres de la matrice $\mathbf{G}_{B,F}$ ;

- extraction d'une matrice $\mathbf{C}'_{B,T}$ à partir de la matrice $\mathbf{C}_{B,T}$ et d'une matrice $\mathbf{\Lambda}'_{B,T}$ à partir de la matrice $\Lambda_{B,T}$, la matrice $\mathbf{\Lambda}'_{B,T}$ comprenant un nombre déterminé $n_{Bt}$' de valeurs propres les plus grandes de $\Lambda_{B,T}$ et la matrice $\mathbf{C}'_{B,T}$ comprenant les vecteurs propres associés à ces $n_{Bt}$' valeurs propres les plus grandes;

- extraction d'une matrice $\mathbf{C}'_{B,F}$ à partir de la matrice $\mathbf{C}_{B,F}$ et d'une matrice $\mathbf{\Lambda}'_{B,F}$ à partir de la matrice $\Lambda_{B,F}$, la matrice $\mathbf{\Lambda}'_{B,F}$ comprenant un nombre déterminé $n_{Bf}$' de valeurs propres les plus grandes de $\Lambda_{B,F}$ et la matrice $\mathbf{C}'_{B,F}$ comprenant les vecteurs propres associés à ces $n_{Bf}$' valeurs propres les plus grandes,

- décomposition des matrices $\mathbf{G}_{D,T}$ et $\mathbf{G}_{D,F}$ de covariance en vecteurs propres selon les relations $\mathbf{G}_{D,T} = \mathbf{C}_{D,T} \Lambda_{D,T} \mathbf{C}_{D,T}{}^H$ et $\mathbf{G}_{D,F} = \mathbf{C}_{D,F} \Lambda_{D,F} \mathbf{C}_{D,F}{}^H$, dans lesquelles :

    - $\mathbf{C}_{D,T}$ est une matrice de vecteurs propres de la matrice $\mathbf{G}_{D,T}$ ;
    - $\Lambda_{D,T}$ est une matrice diagonale comprenant des valeurs propres associées aux vecteurs propres de la matrice $\mathbf{G}_{D,T}$ ;

- $\mathbf{C}_{D,F}$ est une matrice de vecteurs propres de la matrice $\mathbf{G}_{D,F}$; et
- $\Lambda_{D,F}$ est une matrice diagonale comprenant des valeurs propres associées aux vecteurs propres de la matrice $\mathbf{G}_{D,F}$;

- extraction d'une matrice $\mathbf{C}'_{D,T}$ à partir de la matrice $\mathbf{C}_{D,T}$ et d'une matrice $\mathbf{\Lambda}'_{D,T}$ à partir de la matrice $\Lambda_{D,T}$, la matrice $\mathbf{\Lambda}'_{D,T}$ comprenant un nombre déterminé $n_{Dt}'$ de valeurs propres les plus grandes de $\Lambda_{D,T}$ et la matrice $\mathbf{C}'_{D,T}$ comprenant les vecteurs propres associés à ces $n_{Dt}'$ valeurs propres les plus grandes; et

- extraction d'une matrice $\mathbf{C}'_{D,F}$ à partir de la matrice $\mathbf{C}_{D,F}$ et d'une matrice $\mathbf{\Lambda}'_{D,F}$ à partir de la matrice $\Lambda_{D,F}$, la matrice $\mathbf{\Lambda}'_{D,F}$ comprenant un nombre déterminé $n_{Df}'$ de valeurs propres les plus grandes de $\Lambda_{D,F}$ et la matrice $\mathbf{C}'_{D,F}$ comprenant les vecteurs propres associés à ces $n_{Df}'$ valeurs propres les plus grandes,

les vecteurs de pondération étant alors déterminés à l'aide des matrices de vecteurs propres $\mathbf{C}'_{B,T}$, $\mathbf{C}'_{B,F}$, $\mathbf{C}'_{D,T}$, $\mathbf{C}'_{D,F}$ et de valeurs propres $\mathbf{\Lambda}'_{B,T}$, $\mathbf{\Lambda}'_{B,F}$, $\mathbf{\Lambda}'_{D,T}$, $\mathbf{\Lambda}'_{D,F}$.

Le produit de Kronecker de deux matrices $\mathbf{A}$ et $\mathbf{B}$, la matrice $\mathbf{A}$ ayant pour composantes ($a_{ij}$), où i est un entier compris entre 1 et m et j est un entier compris entre 1 et n, est le produit matriciel noté $\mathbf{A} \otimes \mathbf{B}$ et défini par l'expression suivante :

$$\mathbf{A} \otimes \mathbf{B} = \begin{pmatrix} a_{11}\mathbf{B} & \cdots & \cdots & a_{1n}\mathbf{B} \\ \vdots & \cdots & \cdots & \vdots \\ a_{m1}\mathbf{B} & \cdots & \cdots & a_{mn}\mathbf{B} \end{pmatrix}.$$

Cette exploitation de la séparabilité de la matrice de covariance entre le domaine temporel et le domaine fréquentiel permet de réduire encore la complexité du calcul des vecteurs de pondération tout en garantissant des performances très proches de celles obtenues en utilisant l'intégralité de la matrice de covariance.

De plus, l'étape de détermination de l'étape de démodulation de signal peut comprendre des sous-étapes de :

- calcul d'une matrice de covariance $\mathbf{G}_B$ du canal de propagation ;
- détermination des vecteurs de pondération à l'aide de la matrice de covariance $\mathbf{G}_B$.

Avantageusement, l'étape de détermination de l'étape de démodulation de signal peut en outre comprendre une sous-étape de décomposition de la matrice de covariance $\mathbf{G}_B$ en vecteurs propres selon la relation $\mathbf{G}_B = \mathbf{C}_B \Lambda_B \mathbf{C}_B{}^H$ dans laquelle $\mathbf{C}_B$ est une matrice de vecteurs propres de la matrice $\mathbf{G}_B$ et $\mathbf{A}_B$ est une matrice diagonale comprenant des valeurs propres associées aux vecteurs propres de la matrice $\mathbf{G}_B$.

De préférence, l'étape de détermination de l'étape de démodulation de signal peut en outre comprendre une sous-étape d'extraction d'une matrice $\mathbf{C}'_B$ à partir de la matrice $\mathbf{C}_B$ et d'une matrice $\mathbf{\Lambda}'_B$ à partir de la matrice $\mathbf{A}_B$, la matrice $\mathbf{\Lambda}'_B$ comprenant un nombre déterminé $n_B'$ de valeurs propres de $\Lambda_B$ et la matrice $\mathbf{C}'_B$ comprenant les vecteurs propres associés à ces $n_B'$ valeurs propres, les vecteurs de pondération étant alors déterminés à l'aide de la matrice de vecteurs propres $\mathbf{C}'_B$ et de valeurs propres $\mathbf{\Lambda}'_B$.

De plus, la matrice de covariance $\mathbf{G}_B$ peut être le produit de Kronecker d'une matrice $\mathbf{G}_{B,T}$ de covariance dans le domaine temporel et d'une matrice $\mathbf{G}_{B,F}$ de covariance dans le domaine fréquentiel et l'étape de détermination de l'étape de démodulation de signal comprend les sous-étapes de :

- décomposition des matrices $\mathbf{G}_{B,T}$ et $\mathbf{G}_{B,F}$ de covariance en vecteurs propres selon les relations $\mathbf{G}_{B,T} = \mathbf{C}_{B,T} \Lambda_{B,T} \mathbf{C}_{B,T}{}^H$ et $\mathbf{G}_{B,F} = \mathbf{C}_{B,F} \Lambda_{B,F} \mathbf{C}_{B,F}{}^H$, dans lesquelles :

  - $\mathbf{C}_{B,T}$ est une matrice de vecteurs propres de la matrice $\mathbf{G}_{B,T}$ ;
  - $\Lambda_{B,T}$ est une matrice diagonale comprenant des valeurs propres associées aux vecteurs propres de la matrice $\mathbf{G}_{B,T}$;

5

- $\mathbf{C}_{B,F}$ est une matrice de vecteurs propres de la matrice $\mathbf{G}_{B,F}$ ; et
- $\Lambda_{B,F}$ est une matrice diagonale comprenant des valeurs propres associées aux vecteurs propres de la matrice $\mathbf{G}_{B,F}$ ;

- extraction d'une matrice $\mathbf{C}'_{B,T}$ à partir de la matrice $\mathbf{C}_{B,T}$ et d'une matrice $\mathbf{\Lambda}'_{B,T}$ à partir de la matrice $\Lambda_{B,T}$, la matrice $\mathbf{\Lambda}'_{B,T}$ comprenant un nombre déterminé $n_{Bt}'$ de valeurs propres les plus grandes de $\Lambda_{B,T}$ et la matrice $\mathbf{C}'_{B,T}$ comprenant les vecteurs propres associés à ces $n_{Bt}'$ valeurs propres les plus grandes;

- extraction d'une matrice $\mathbf{C}'_{B,F}$ à partir de la matrice $\mathbf{C}_{B,F}$ et d'une matrice $\mathbf{\Lambda}'_{B,F}$ à partir de la matrice $\Lambda_{B,F}$, la matrice $\mathbf{\Lambda}'_{B,F}$ comprenant un nombre déterminé $n_{Bf}'$ de valeurs propres les plus grandes de $\Lambda_{B,F}$ et la matrice $\mathbf{C}'_{B,F}$ comprenant les vecteurs propres associés à ces $n_{Bf}'$ valeurs propres les plus grandes,

les vecteurs de pondération étant alors déterminés à l'aide des matrices de vecteurs propres $\mathbf{C}'_{B,T}$, $\mathbf{C}'_{B,F}$ et de valeurs propres $\mathbf{\Lambda}'_{B,T}$, $\mathbf{\Lambda}'_{B,F}$.

De manière préférentielle, le signal émis est un signal multiporteuses, notamment un signal OFDM.

L'invention peut également s'appliquer à des systèmes monoporteuses.

Selon un autre aspect de l'invention, il est proposé un équipement récepteur comprenant au moins deux antennes recevant chacune un signal transmis à travers un canal de propagation radioélectrique associé, les signaux reçus correspondant à un même signal émis comprenant des trames de symboles réparties en temps et en fréquence dans lesquelles certains symboles, dits symboles pilotes, sont connus du récepteur, ledit procédé comprenant des moyens de :

- blanchiment de bruit pour former deux signaux combinés dont les bruits sont indépendants ;
- normalisation des bruits des signaux combinés pour former deux signaux dont les bruits sont indépendants et de normes moyennes égales ;
- étape de démodulation de signal à combinaison maximale de rapport signal à bruit des deux signaux à bruits indépendants et de normes moyennes égales ;

caractérisé en ce que le moyen de blanchiment de bruit pour former les deux signaux combinés comprend des moyens de :

- pondération de chacun des signaux reçus avec de premiers vecteurs de pondération respectifs associés à une antenne respective du récepteur, le signal associé à la première antenne étant pondéré par un vecteur $w_1$ et le signal associé à la deuxième antenne étant pondéré par un vecteur $w_2$,
- combinaison des signaux reçus pondérés pour former un premier signal combiné ($c_1$),
- pondération d'un signal de référence comprenant lesdits symboles pilotes avec un autre vecteur de pondération ($w_d$),
- comparaison du premier signal combiné et du signal de référence pondéré pour former une erreur ($\varepsilon$), et
- détermination des vecteurs de pondération ($w_1$, $w_2$ et $w_d$) à l'aide du critère du maximum a posteriori en maximisant la probabilité de réalisation desdits vecteurs de pondération conditionnellement à l'erreur obtenue,
- pondération de chaque signal reçu avec des deuxièmes vecteurs de pondération Le signal reçu sur la première antenne étant pondéré par le conjugué du vecteur complexe $w_2$ et le signal reçu sur la première antenne étant pondéré par l'opposé du conjugué du vecteur complexe $w_1$,,combinaison des signaux reçus pondérés par les deuxièmes vecteurs de pondération pour former un deuxième signal combiné ($c_2$).

Avantageusement, l'équipement récepteur selon l'invention peut en outre comprendre des moyens de détermination des coefficients respectifs ($\alpha_1$ et $\alpha_2$) du canal vu par le signal utile associé à une antenne respective du récepteur et utilisés dans l'étape de démodulation de signal à combinaison maximale de rapport signal à bruit des deux signaux, r' et r", obtenus à l'issue de l'étape de blanchiment du bruit, peuvent être déterminés à l'aide du critère du maximum a posteriori en maximisant la probabilité de réalisation du canal ($\alpha_1$ et $\alpha_2$) conditionnellement à l'erreur présente d'une part dans le signal $c_1$ et d'autre part dans le signal $c_2$, en prenant en compte le canal de propagation vu dans le signal $c_1$ et dans le signal $c_2$.

Selon un autre aspect de l'invention, il est proposé un programme d'ordinateur comportant des instructions pour la mise en oeuvre du procédé selon l'invention lorsque le programme est exécuté par au moins un processeur.

## Description des figures et modes de réalisation

D'autres avantages et particularités de l'invention apparaîtront à la lecture de la description détaillée de mises en oeuvre et de modes de réalisation nullement limitatifs, et des dessins annexés suivants :

- la figure 1 est un schéma d'un équipement récepteur selon l'invention ;
- la figure 2 est un schéma illustrant le principe de fonctionnement du procédé de démodulation ;
- la figure 3 est un organigramme illustrant une première partie du fonctionnement du procédé de démodulation selon l'invention ;
- la figure 4 est une représentation d'un signal utile dans une base de projection ; et
- la figure 5 est un organigramme illustrant une deuxième partie du fonctionnement du procédé de démodulation selon l'invention.

Ces modes de réalisation n'étant nullement limitatifs, on pourra notamment considérer des variantes de l'invention ne comprenant qu'une sélection de caractéristiques décrites par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou à différencier l'invention par rapport à l'état de la technique antérieure.

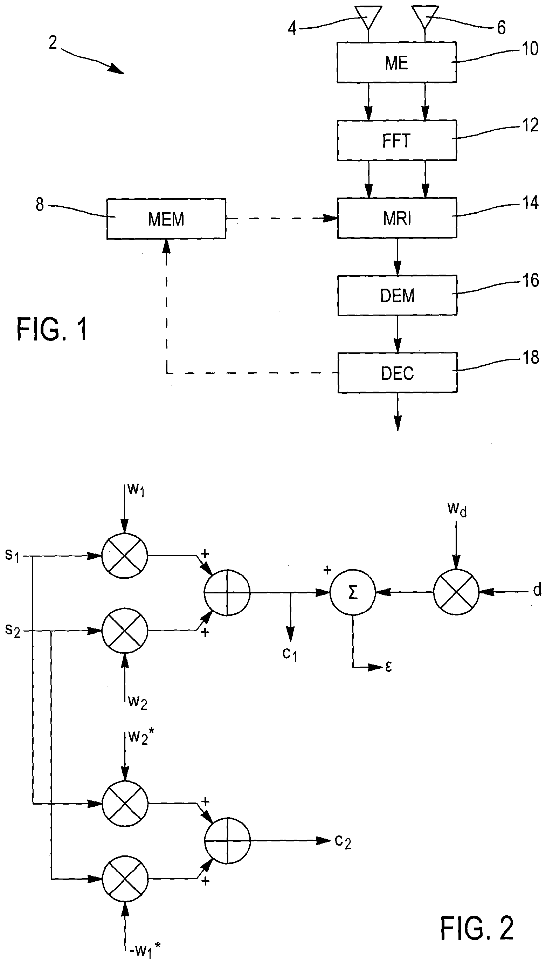

La figure 1 représente un équipement récepteur 2 d'un système de transmission OFDM, comme par exemple une station de base ou un terminal mobile.

Le récepteur 2 comprend deux antennes 4, 6 pour la réception de deux signaux correspondant à un même signal OFDM transmis depuis un émetteur à travers deux canaux de propagation radioélectriques associés aux antennes 4, 6. Les canaux associés aux antennes 4, 6 sont supposés répondre à des contraintes physiques identiques.

Le signal OFDM émis par l'émetteur est organisé en trames de symboles répartis en temps et en fréquence parmi lesquels certains symboles, dits symboles pilotes, sont connus du récepteur 2 et sont stockés dans une mémoire 8 dudit récepteur 2. Chaque trame comprend ainsi $n$ symboles avec $n_f$ sous-porteuses et $n_t$ temps-symboles, $n$ étant égal au produit de $n_f$ et de $n_t$.

Le récepteur 2 comprend un module d'entrée 10 comprenant des étages d'amplification, de mise en forme en bande de base, d'échantillonnage et de suppression d'intervalle de garde.

Le récepteur 2 comprend également des moyens de conversion temps-fréquence 12 des signaux reçus par les antennes 4, 6 et traités par le module d'entrée 10 pour les passer du domaine temporel au domaine fréquentiel. Ces moyens de conversion temps-fréquence 12 mettent en oeuvre une transformation de Fourier rapide (on peut parler de FFT, pour l'anglais Fast Fourier Transform).

Le récepteur 2 comprend en outre un module de réduction d'interférences 14 permettant de réduire le niveau d'interférences dans un signal utile résultant de la combinaison des signaux reçus par les deux antennes 4, 6. Ces interférences peuvent être dues, à titre d'exemples, à la présence de brouilleurs émettant sur le même canal radio que l'émetteur.

Le module de réduction d'interférences 14 est apte à fournir des symboles de données dans lesquels la contribution des interférences est minimisée.

Un démodulateur 16 du récepteur 2 permet de démoduler ces symboles de données en des bits démodulés selon une même technique de modulation que celle utilisée dans l'émetteur. Le démodulateur 16 est en outre agencé pour déterminer une vraisemblance de chaque bit démodulé. La vraisemblance d'un bit a une valeur souple ("soft value") négative ou positive, par comparaison à une valeur dure ("hard value") telle que la valeur binaire "1" ou "0", pour indiquer que le démodulateur 16 délivre des valeurs flottantes réelles ayant chacune un signe qui impose une décision ultérieure, par un décodeur 18 du récepteur 2, sur l'état du bit correspondant, c'est-à-dire une décision sur la valeur "dure" "0" ou "1".

Le décodeur 18 permet ainsi de décoder les bits démodulés fournis par le démodulateur 16 en fonction des vraisemblances précédemment déterminées. Le décodeur 18 met en oeuvre un décodage correspondant au codage utilisé à l'émission du signal, par exemple un décodage convolutif qui corrige les erreurs au moyen de l'algorithme de Viterbi.

La figure 2 illustre le principe du procédé de réduction d'interférences utilisé par le module de réduction d'interférences 14.

En notant $s_1$ et $s_2$ les signaux reçus respectivement sur les antennes 4 et 6, le principe utilisé par la présente invention consiste à appliquer des pondérations $w_1$ et $w_2$ respectivement aux signaux $s_1$ et $s_2$, puis de combiner les deux signaux pondérés, par exemple en les sommant, pour former un signal $c_1$ duquel est soustraite une estimée du signal émis d pondérée par une pondération $w_d$. La différence résultante $\varepsilon$ représente une erreur résiduelle.

Le procédé de l'invention utilise de manière avantageuse l'approche du maximum a posteriori pour calculer les pondérations les plus probables connaissant cette erreur.

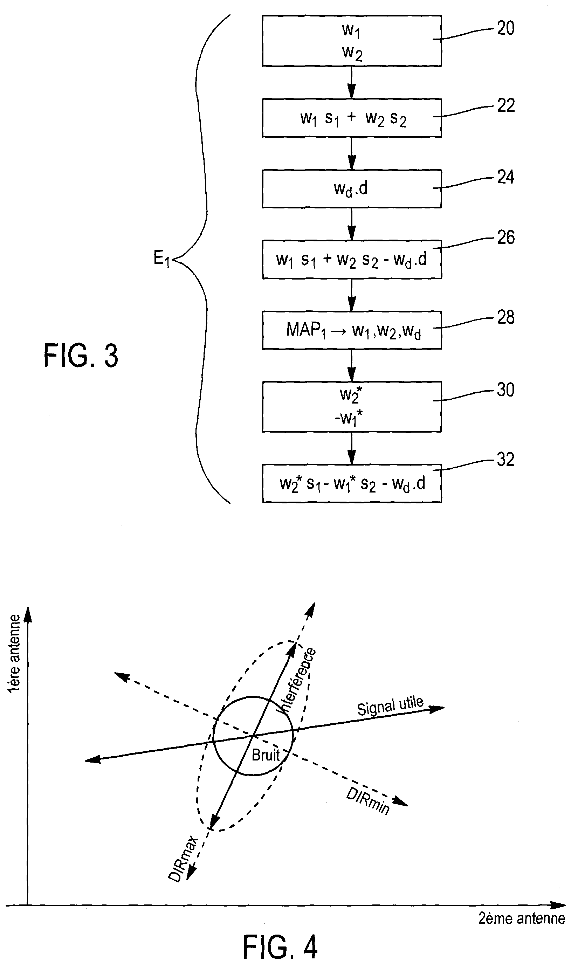

Les étapes de ce procédé sont décrites en référence à l'organigramme de la figure 3.

Lors d'une première étape 20, le module de réduction d'interférences 14 pondère les signaux $s_1$ et $s_2$ avec de premiers vecteurs de pondération ($w_1$; $w_2$) respectifs associés à une antenne (4,6) respective du récepteur (2). Les premiers vecteurs de pondération ($w_1$; $w_2$) définissent une direction minimale, notée DIRmin, pour les interférences comme cela est représenté sur la figure 4. Le contenu des premiers vecteurs de pondération ($w_1$; $w_2$) reste à déterminer.

A l'étape 22, le module de réduction d'interférences 14 combine, ici en les sommant, les signaux $s_1$ et $s_2$ pondérés pour former un premier signal combiné ($c_1$).

Ainsi, on a : $c_1 = w_1 s_1 + w_2 s_2$.

A l'étape 24, le module de réduction d'interférences 14 pondère un signal de référence d, comprenant les symboles pilotes, avec un autre vecteur de pondération $w_d$ dont le contenu est à déterminer.

Les vecteurs $w_1$, $w_2$ et $w_d$ sont des vecteurs colonnes contenant chacun autant de lignes que le signal reçu dans une trame contient de symboles, soit n lignes.

A l'étape 26, le module de réduction d'interférences 14 détermine une erreur $\varepsilon$ correspondant à la différence entre le premier signal combiné $c_1$ et le signal de référence pondéré.

Ainsi en notant **w** le vecteur consistant en une concaténation des vecteurs $w_1$, $w_2$ et $w_d$ et **R** la matrice comprenant les signaux reçus et le signal de référence définie selon l'expression :

$$\mathbf{R} = \left[ \begin{bmatrix} s_{1,0,0} & 0 & \dots & 0 \\ 0 & s_{1,\dots} & 0 & \dots \\ \dots & 0 & s_{1,\dots} & 0 \\ 0 & \dots & 0 & s_{1,n_f,n_t} \end{bmatrix} \begin{bmatrix} s_{2,0,0} & 0 & \dots & 0 \\ 0 & s_{2,\dots} & 0 & \dots \\ \dots & 0 & s_{2,\dots} & 0 \\ 0 & \dots & 0 & s_{2,n_f,n_t} \end{bmatrix} \begin{bmatrix} -d_{0,0} & 0 & \dots & 0 \\ 0 & -d_{\dots} & 0 & \dots \\ \dots & 0 & -d_{\dots} & 0 \\ 0 & \dots & 0 & -d_{n_f,n_t} \end{bmatrix} \right] ,$$

l'erreur $\varepsilon$ est un vecteur exprimé par $\varepsilon = \mathbf{R}.\mathbf{w}$.

A l'étape 28, le module de réduction d'interférences 14 calcule les vecteurs $w_1$, $w_2$ et $w_d$ en utilisant l'approche MAP.

Cette approche consiste à maximiser la probabilité de réalisation du vecteur de pondération **w**. Cette probabilité est conditionnelle à l'observation de l'erreur $\varepsilon$.

En utilisant la formule de Bayes, cette probabilité est égale à la probabilité que l'erreur $\varepsilon$ est observée conditionnellement à la probabilité que la pondération est égale au vecteur **w**, cette probabilité conditionnelle étant multipliée par la probabilité que le vecteur de pondération **w** se réalise. Cela est exprimé par la relation suivante :

$$P(\mathbf{w}) = f(\mathbf{w}/\boldsymbol{\varepsilon}) \propto f(\boldsymbol{\varepsilon}/\mathbf{w}) \cdot f(\mathbf{w}),$$

dans laquelle P et f indiquent des probabilités et le symbole $\propto$ indique la relation « équivalent à ».

Or, les vecteurs de pondération $w_1$, $w_2$ et $w_d$ sont liés au canal de propagation. Ce canal est conditionné par des contraintes relatives à son étalement temporel maximal, dû à des réflexions sur des obstacles lointains, et à son étalement fréquentiel maximal, dû à la vitesse de l'équipement récepteur et à la fréquence porteuse, c'est-à-dire l'étalement Doppler.

D'une part, dans le domaine fréquentiel, l'étalement en fréquence du canal, nommé étalement Doppler, dû aux réflexions sur des obstacles proches est limité. Cet étalement est compris entre $-F_D$ et $+F_D$, où $F_D$ est la fréquence Doppler maximale donnée par la relation $F_D = \dfrac{v}{c}.F_p$ , dans laquelle v est la vitesse du récepteur 2, c est la vitesse de la lumière, et $F_p$ est la fréquence porteuse. Les composantes du spectre de fréquence du canal de propagation selon l'axe des fréquences sont donc comprises entre ces limites $-F_D$ et $+F_D$.

D'autre part, l'étalement temporel du canal, dû aux réflexions sur les obstacles lointains, est limité. Cet étalement temporel dépend de la bande de fréquences utilisée et de l'environnement. A titre d'exemples, à une fréquence porteuse de 400 MHz, en environnement urbain l'étalement temporel est de l'ordre de 5 μs alors qu'en environnement montagneux, cet étalement est de l'ordre de 15 μs. Les composantes de la réponse temporelle du canal sont donc comprises entre des limites fixes pour des conditions d'environnement données.

Les limites du spectre de fréquences et de la réponse temporelle du canal sont connues du récepteur 2 et sont stockées dans la mémoire 8.

Ces caractéristiques du canal de propagation sont représentées par une matrice dite matrice globale de covariance **G.**

En raison des contraintes exprimées dans la matrice globale de covariance **G**, la probabilité d'occurrence du vecteur de pondération **w** est donnée par l'expression :

$$f(\mathbf{w}) = \beta \times e^{-\frac{1}{2} \mathbf{w}^H \mathbf{G}^{-1} \mathbf{w}}$$

dans laquelle $\beta$ est une constante et la notation $\mathbf{X}^H$ indique qu'il s'agit d'une matrice **X** conjuguée et transposée.

En outre, sous l'hypothèse que le bruit du canal est de type gaussien, la probabilité conditionnelle d'observation de l'erreur $\varepsilon$ est donnée par l'expression :

$$f(\varepsilon / \mathbf{w}) = \alpha \times e^{-\|\mathbf{R} \cdot \mathbf{w}\|^2 / (2.\sigma^2)}$$

dans laquelle $\alpha$ est une constante et $\sigma^2$ représente la variance du bruit dans le signal correspondant aux signaux reçus sur les différentes antennes pondérés et combinés.

Ainsi la probabilité de réalisation, exprimant le critère MAP, du vecteur de pondération **w** est donnée par l'expression [1] suivante :

$$P(\mathbf{w}) = \alpha \times e^{-\frac{\|\mathbf{R} \cdot \mathbf{w}\|^2}{(2.\sigma^2)}} \times \beta \times e^{-\frac{1}{2} \cdot \mathbf{w}^H \mathbf{G}^{-1} \mathbf{w}} \qquad [1].$$

En outre, la variance, ou puissance, $\sigma^2$ est égale à :

$$\sigma^2 = \sigma_1^2 \|\mathbf{w}_1\|^2 + \sigma_2^2 \|\mathbf{w}_2\|^2 \,,$$

dans laquelle $\sigma_1^2$ est la variance du bruit sur la première antenne 4 et $\sigma_2^2$ est la variance du bruit sur la deuxième antenne 6.

En supposant que la puissance du bruit est la même sur chacune des deux antennes, c'est-à-dire que $\sigma_1^2 = \sigma_2^2$

la variance du bruit totale est alors égale à $\sigma^2 = \sigma_1^2 \left( \|\mathbf{w}_1\|^2 + \|\mathbf{w}_2\|^2 \right).$

En prenant l'opposé du logarithme de l'expression [1], on obtient l'expression [2] suivante :

$$L(P(\mathbf{w})) = \frac{\|\mathbf{R} \cdot \mathbf{w}\|^2}{\sigma_1^2 \left( \|\mathbf{w}_1\|^2 + \|\mathbf{w}_2\|^2 \right)} + \mathbf{w}^H \mathbf{G}^{-1} \mathbf{w} + cst \qquad [2],$$

dans laquelle $cst$ désigne une valeur constante.

Le module de réduction d'interférences 14 cherche à minimiser ce logarithme $L(P(\mathbf{w}))$.

Par ailleurs, la matrice de covariance **G** est une matrice diagonale par blocs constituée par concaténation de matrices de covariance correspondant à chacun des vecteurs de pondération $\mathbf{w}_1$, $\mathbf{w}_2$ et $\mathbf{w}_d$.

La matrice de covariance de $\mathbf{w}_1$ est la même que celle de $\mathbf{w}_2$ étant donné que les deux vecteurs de pondération $\mathbf{w}_1$ et $\mathbf{w}_2$ sont tous deux homogènes à un canal de propagation, dans le cas de deux antennes de réception. Cette matrice de covariance est notée $\mathbf{G}_B$ et représente les contraintes temporelles et fréquentielles relatives au canal de propagation.

Le vecteur de pondération $\mathbf{w}_d$ est homogène au produit, symbole par symbole, de deux canaux de propagation, dans le cas de deux antennes réception. La matrice de covariance correspondante $\mathbf{G}_D$ représente les contraintes temporelles et fréquentielles relatives à un tel produit.

La matrice de covariance **G** peut donc s'écrire :

$$\mathbf{G} = \begin{pmatrix} \mathbf{G}_B & 0 & 0 \\ 0 & \mathbf{G}_B & 0 \\ 0 & 0 & \mathbf{G}_D \end{pmatrix}.$$

En outre, on impose la contrainte suivante :

$$k^2 = \left\| \mathbf{w}_1 \right\|^2 + \left\| \mathbf{w}_2 \right\|^2 = cst_2.$$

Cette contrainte ne limite pas les solutions au problème de minimisation de l'expression [2]. En effet, quelle que soit la valeur de $k^2$, la solution **w** ne change pas étant donné que changer cette constante ne ferait que multiplier la solution par une constante scalaire.

Dans la suite, $k^2$ est fixé à 2. Ceci permet de considérer que les pondérations $w_1$ et $w_2$ sont chacune de puissance unitaire. Alors la matrice $\mathbf{G}_B$ est la matrice de covariance normalisée, c'est-à-dire obtenue avec une puissance moyenne unitaire du canal, et la matrice $G_D$ est la matrice de covariance correspondant au produit, symbole par symbole, de deux canaux de puissance unitaire. En conséquence, $\sigma_1$ représente l'inverse du rapport signal sur bruit observé sur une quelconque des antennes.

Il est possible de se fixer une valeur de rapport signal sur bruit cible, cette valeur ne changeant pas quelle que soit la valeur effective de la puissance de bruit et de la puissance de signal utile. D'autres solutions sont possibles comme, par exemple, d'estimer le rapport signal sur bruit au fur et à mesure de la réception et de la démodulation des informations reçues, par exemple sur les symboles pilotes qui sont connus de l'émetteur et du récepteur. Dans ce cas il est possible d'adapter dynamiquement le rapport signal sur bruit dans le processus d'estimation du canal.

L'expression [2] peut alors s'écrire : $L\big(P(\mathbf{w})\big) = \dfrac{\left\| \mathbf{R}.\mathbf{w} \right\|^2}{2.\sigma_1^2} + \mathbf{w}^H \mathbf{G}^{-1}\mathbf{w} + cst$ .

Le problème de minimisation de l'étape 28 est ainsi un problème d'optimisation avec contrainte, qui est résolu avec les multiplicateurs de Lagrange selon la relation suivante :

$$\nabla_{\mathbf{w}}\left(L(P(\mathbf{w}))\right) = \left(\frac{\mathbf{R}^H \mathbf{R}}{2.\sigma_1^2} + \mathbf{G}^{-1}\right)\mathbf{w} - \mu\mathbf{N}^H\mathbf{N}\mathbf{w}$$

dans laquelle $\nabla_{\mathbf{w}}$ désigne le gradient par rapport au vecteur de pondération **w** et la matrice **N** est la matrice identité pour les deux signaux reçus aux antennes 4, 6 et la matrice nulle pour le signal de référence.

En d'autres termes, la matrice **N** peut s'écrire :

$$\mathbf{N} = \begin{pmatrix} 1 & 0 & \cdots & \cdots & \cdots & \cdots & \cdots & \cdots & 0 \\ 0 & \ddots & \ddots & & & & & & \vdots \\ \vdots & \ddots & 1 & \ddots & & & & & \vdots \\ \vdots & & \ddots & 1 & \ddots & & & & \vdots \\ \vdots & & & \ddots & \ddots & \ddots & & & \vdots \\ \vdots & & & & \ddots & 1 & \ddots & & \vdots \\ \vdots & & & & & \ddots & 0 & \ddots & \vdots \\ \vdots & & & & & & \ddots & \ddots & 0 \\ 0 & \cdots & \cdots & \cdots & \cdots & \cdots & \cdots & 0 & 0 \end{pmatrix}.$$

La minimisation du gradient donne alors l'expression [3] suivante :

$$\nabla_{\mathbf{w}}(L(P(\mathbf{w}))) = 0 \Rightarrow (\frac{\mathbf{R}^H \mathbf{R}}{2.\sigma_1^2} + \mathbf{H})\mathbf{w} = \mu \mathbf{N}^H \mathbf{N}\mathbf{w} \qquad [3],$$

dans laquelle la matrice **H** est égale à l'inverse de la matrice de covariance **G**.

Le vecteur de pondération **w** solution du problème de minimisation est ainsi un vecteur propre généralisé à la fois du terme $(\frac{\mathbf{R}^H \mathbf{R}}{2.\sigma_1^2} + \mathbf{H})$ et du terme $\mathbf{N}^H\mathbf{N}$ et $\mu$ est la valeur propre généralisée associée.

En outre, la solution doit vérifier la relation $L(P(\mathbf{w})) = \mu + cst.$
Ainsi, le vecteur de pondération **w** minimisant $L(P(\mathbf{w}))$ est le vecteur propre généralisé correspondant à la valeur propre généralisée $\mu$ la plus petite.

Selon une réalisation préférée, afin de réduire la complexité des calculs, les matrices de covariance $\mathbf{G}_B$ et $\mathbf{G}_D$ sont décomposées à l'étape 28 en vecteurs propres et valeurs propres de la manière suivante :

$$\begin{cases} \mathbf{G} = \begin{pmatrix} \mathbf{G}_B & 0 & 0 \\ 0 & \mathbf{G}_B & 0 \\ 0 & 0 & \mathbf{G}_D \end{pmatrix} \\ \begin{cases} \mathbf{G}_B = \mathbf{C}_B.\mathbf{\Lambda}_B.\mathbf{C}_B^H \\ \mathbf{G}_D = \mathbf{C}_D.\mathbf{\Lambda}_D.\mathbf{C}_D^H \end{cases} \Rightarrow \begin{cases} \mathbf{G}_B^{-1} = \mathbf{C}_B.\mathbf{\Lambda}_B^{-1}.\mathbf{C}_B^H \\ \mathbf{G}_D^{-1} = \mathbf{C}_D.\mathbf{\Lambda}_D^{-1}.\mathbf{C}_D^H \end{cases} \end{cases},$$

où les matrices $\mathbf{C}_B$ et $\mathbf{C}_D$ sont des matrices de vecteurs propres des matrices $\mathbf{G}_B$ et $\mathbf{G}_D$ respectivement et les matrices $\Lambda_B$ et $\Lambda_D$ sont les matrices diagonales de valeurs propres correspondantes respectivement.

La matrice de covariance **G** peut ainsi s'écrire $\mathbf{G} = \mathbf{C}\Lambda\mathbf{C}^H$ dans laquelle **C** est une matrice de vecteurs propres de la matrice **G** et **Λ** est une matrice diagonale comprenant des valeurs propres associées aux vecteurs propres de la matrice **G**.

Ainsi, la matrice inverse de la matrice de covariance **G** est égale à :

$$\begin{cases} \mathbf{G}^{-1} = \begin{pmatrix} \mathbf{C}_B.\mathbf{\Lambda}_B^{-1}.\mathbf{C}_B^H & 0 & 0 \\ 0 & \mathbf{C}_B.\mathbf{\Lambda}_B^{-1}.\mathbf{C}_B^H & 0 \\ 0 & 0 & \mathbf{C}_D.\mathbf{\Lambda}_D^{-1}.\mathbf{C}_D^H \end{pmatrix} \\ soit \\ \mathbf{G}^{-1} = \mathbf{C}.\mathbf{\Lambda}^{-1}.\mathbf{C}^H \end{cases}.$$

Selon une réalisation, la complexité du calcul est encore réduite en retenant uniquement certaines valeurs propres de la matrice de covariance **G** ainsi que les valeurs propres correspondantes. Dans ce cas, une matrice **C'** est extraite à partir de la matrice **C** et une matrice **A'** est extraite à partir de la matrice $\Lambda$, la matrice **A'** comprenant un nombre déterminé n' de valeurs propres de **A** et la matrice **C'** comprenant les vecteurs propres associés à ces n' valeurs propres. Le vecteur de pondération **w** est alors déterminé à l'aide des matrices de vecteurs propres **C'** et de valeurs propres $\Lambda'$.

Dans une réalisation préférée, la matrice de covariance G est une matrice diagonale par bloc, constituée des matrices $\mathbf{G}_B$, $\mathbf{G}_B$ et $\mathbf{G}_D$, et pour laquelle chacune des matrices $\mathbf{G}_B$ et $\mathbf{G}_D$ est le produit de Kronecker d'une matrice $\mathbf{G}_{B,T}$, respectivement $\mathbf{G}_{D,T}$, de covariance dans le domaine temporel et d'une matrice $\mathbf{G}_{B,F}$, respectivement $\mathbf{G}_{D,F}$, de covariance dans le domaine fréquentiel et l'étape de détermination comprend les sous-étapes de :

- décomposition des matrices $\mathbf{G}_{B,T}$ et $\mathbf{G}_{B,F}$ de covariance en vecteurs propres selon les relations $\mathbf{G}_{B,T} = \mathbf{C}_{B,T}\Lambda_{B,T}\mathbf{C}_{B,T}^H$

et $\mathbf{G}_{B,F} = \mathbf{C}_{B,F}\Lambda_{B,F}\mathbf{C}_{B,F}{}^H$, dans lesquelles :

- $\mathbf{C}_{B,T}$ est une matrice de vecteurs propres de la matrice $\mathbf{G}_{B,T}$ ;
- $\Lambda_{B,T}$ est une matrice diagonale comprenant des valeurs propres associées aux vecteurs propres de la matrice $\mathbf{G}_{B,T}$;
- $\mathbf{C}_{B,F}$ est une matrice de vecteurs propres de la matrice $\mathbf{G}_{B,F}$; et
- $\Lambda_{B,F}$ est une matrice diagonale comprenant des valeurs propres associées aux vecteurs propres de la matrice $\mathbf{G}_{B,F}$ ;

- extraction d'une matrice $\mathbf{C}'_{B,T}$ à partir de la matrice $\mathbf{C}_{B,T}$ et d'une matrice $\Lambda'_{B,T}$ à partir de la matrice $\Lambda_{B,T}$, la matrice $\Lambda'_{B,T}$ comprenant un nombre déterminé $n_{Bt}'$ des valeurs propres les plus grandes de $\Lambda_{B,T}$ et la matrice $\mathbf{C}'_{B,T}$ comprenant les vecteurs propres associés à ces $n_{Bt}'$ valeurs propres les plus grandes; et

- extraction d'une matrice $\mathbf{C}'_{B,F}$ à partir de la matrice $\mathbf{C}_{B,F}$ et d'une matrice $\Lambda'_{B,F}$ à partir de la matrice $\Lambda_{B,F}$, la matrice $\Lambda'_{B,F}$ comprenant un nombre déterminé $n_{Bf}'$ des valeurs propres les plus grandes de $\Lambda_{B,F}$ et la matrice $\mathbf{C}'_{B,F}$ comprenant les vecteurs propres associés à ces $n_{Bf}'$ valeurs propres les plus grandes,

- décomposition des matrices $\mathbf{G}_{D,T}$ et $\mathbf{G}_{D,F}$ de covariance en vecteurs propres selon les relations $\mathbf{G}_{D,T} = \mathbf{C}_{D,T}\Lambda_{D,T}\mathbf{C}_{D,T}{}^H$ et $\mathbf{G}_{D,F} = \mathbf{C}_{D,F}\Lambda_{D,F}\mathbf{C}_{D,F}{}^H$, dans lesquelles :

- $\mathbf{C}_{D,T}$ est une matrice de vecteurs propres de la matrice $\mathbf{G}_{D,T}$ ;
- $\Lambda_{D,T}$ est une matrice diagonale comprenant des valeurs propres associées aux vecteurs propres de la matrice $\mathbf{G}_{D,T}$;
- $\mathbf{C}_{D,F}$ est une matrice de vecteurs propres de la matrice $\mathbf{G}_{D,F}$; et
- $\Lambda_{D,F}$ est une matrice diagonale comprenant des valeurs propres associées aux vecteurs propres de la matrice $\mathbf{G}_{D,F}$;
- extraction d'une matrice $\mathbf{C}'_{D,T}$ à partir de la matrice $\mathbf{C}_{D,T}$ et d'une matrice $\Lambda'_{D,T}$ à partir de la matrice $\Lambda_{D,T}$, la matrice $\Lambda'_{D,T}$ comprenant un nombre déterminé $n_{Dt}'$ des valeurs propres les plus grandes de $\Lambda_{D,T}$ et la matrice $\mathbf{C}'_{D,T}$ comprenant les vecteurs propres associés à ces $n_{Dt}'$ valeurs propres les plus grandes; et

- extraction d'une matrice $\mathbf{C}'_{D,F}$ à partir de la matrice $\mathbf{C}_{D,F}$ et d'une matrice $\Lambda'_{D,F}$ à partir de la matrice $\Lambda_{D,F}$, la matrice $\Lambda'_{D,F}$ comprenant un nombre déterminé $n_{Df}'$ des valeurs propres les plus grandes de $\Lambda_{D,F}$ et la matrice $\mathbf{C}'_{D,F}$ comprenant les vecteurs propres associés à ces $n_{Df}'$ valeurs propres les plus grandes.

Le vecteur de pondération $\mathbf{w}$ est alors déterminé à l'aide des matrices de vecteurs propres $\mathbf{C}'_{B,T}$ , $\mathbf{C}'_{B,F}$ , $\mathbf{C}'_{D,T}$ , $\mathbf{C}'_{D,F}$ et de valeurs propres $\Lambda'_{B,T}$ , $\Lambda'_{B,F}$ , $\Lambda'_{D,T}$ , $\Lambda'_{D,F}$

De retour à l'expression [3] et en utilisant la décomposition en vecteurs propres et en valeurs propres de la matrice de covariance, on obtient :

$$\left(\frac{\mathbf{R}^H\mathbf{R}}{\sigma^2} + \mathbf{H}\right)\mathbf{w} = \mu\mathbf{N}^H\mathbf{N}\mathbf{w} \begin{cases} \Leftrightarrow \left(\dfrac{\mathbf{R}^H\mathbf{R}}{2.\sigma^2} + \mathbf{C}.\Lambda^{-1}.\mathbf{C}^H\right)\mathbf{w} = \mu\mathbf{N}^H\mathbf{N}\mathbf{w} \\[3em] \Leftrightarrow \left(\dfrac{\mathbf{C}^H\mathbf{R}^H\mathbf{R}\mathbf{C}}{2.\sigma^2} + \Lambda^{-1}\right)\mathbf{y} = \mu\mathbf{C}^H\mathbf{N}^H\mathbf{N}\mathbf{C}\mathbf{y} \end{cases}$$

où y =C$^H$ **w** où y est la concaténation de vecteurs y$_1$, y$_2$ et y$_d$ :

$$\mathbf{y} = \begin{bmatrix} y_1 \\ y_2 \\ y_d \end{bmatrix} = \mathbf{C}^H \mathbf{w} = \begin{bmatrix} \mathbf{C}_B{}^H & 0 & 0 \\ 0 & \mathbf{C}_B{}^H & 0 \\ 0 & 0 & \mathbf{C}_D{}^H \end{bmatrix} \begin{bmatrix} w_1 \\ w_2 \\ w_d \end{bmatrix}$$

Le problème peut encore être simplifié en séparant les équations en y$_1$ et y$_2$ de celle en y$_d$. Cela peut être fait en multipliant l'équation à gauche par M=I-N, respectivement l'équation à gauche par N.

$$\left( \frac{1}{2\sigma^2} MC^H R^H RC + M\Lambda^{-1} \right)\overline{y} = \mu MC^H NC\overline{y} = 0$$

$$\left( \frac{1}{2\sigma^2} NC^H R^H RC + N\Lambda^{-1} \right)\overline{y} = \mu NC^H NC\overline{y} = \mu C^H NC\overline{y}$$

La solution de la première équation en y$_d$ donne:

$$\left( \mathbf{C}_D{}^H d^H d\mathbf{C}_D + 2\sigma^2 \Lambda_D{}^{-1} \right)y_d = \begin{bmatrix} \mathbf{C}_D{}^H d^H s_1 \mathbf{C}_B & \mathbf{C}_D{}^H d^H s_2 \mathbf{C}_B \end{bmatrix}\overline{y_{12}}, \quad \overline{y_{12}} \equiv \begin{bmatrix} y_1 \\ y_2 \end{bmatrix}$$

D'où

$$\left( \frac{1}{2\sigma^2} \begin{bmatrix} \mathbf{C}_B{}^H s_1{}^H s_1 \mathbf{C}_B & \mathbf{C}_B{}^H s_1{}^H s_2 \mathbf{C}_B \\ \mathbf{C}_B{}^H s_2{}^H s_1 \mathbf{C}_B & \mathbf{C}_B{}^H s_2{}^H s_2 \mathbf{C}_B \end{bmatrix} - \frac{1}{2\sigma^2} \begin{bmatrix} \mathbf{C}_B{}^H s_1{}^H d\mathbf{C}_D \\ \mathbf{C}_B{}^H s_2{}^H d\mathbf{C}_D \end{bmatrix} \left( \mathbf{C}_D{}^H d^H d\mathbf{C}_D + 2\sigma^2 \Lambda_D{}^{-1} \right)^{-1} \begin{bmatrix} \mathbf{C}_D{}^H d^H s_1 \mathbf{C}_B & \mathbf{C}_D{}^H d^H s_2 \mathbf{C}_B \end{bmatrix} + \begin{bmatrix} \Lambda_B & 0 \\ 0 & \Lambda_B \end{bmatrix}^{-1} \right)\overline{y_{12}} = \mu\overline{y_{12}}$$

Après avoir déterminé le vecteur **y** à partir de l'expression précédente, le module de réduction d'interférences 14 calcule le vecteur de pondération **w** selon la relation :

$$\mathbf{w} = \mathbf{C}.\mathbf{y}.$$

A l'étape 30, le module de réduction d'interférences 14 pondère les signaux reçus s$_1$ et s$_2$ respectivement par des vecteurs de pondération $w_2^*$ et $-w_1^*$. Ainsi le vecteur ($w_1$,$w_2$), dit premier vecteur de pondération, formé par les premiers vecteurs de pondération ($w_1$,$w_2$) est orthogonal (c'est-à-dire que le produit hermitien est nul) sur chaque symbole au vecteur $\left( w_2^*, -w_1^* \right)$, dit deuxième vecteur de pondération, formé par les deuxièmes vecteurs de pondération $\left( w_2^*, -w_1^* \right)$. Les deuxièmes vecteurs de pondération $\left( w_2^*, -w_1^* \right)$ définissent une direction maximale, notée DIRmax, pour les interférences comme cela est représenté sur la figure 4.

La notation **X**$^*$ indique qu'il s'agit d'une matrice **X** conjuguée.

A l'étape 32, le module de réduction d'interférences 14 combine, ici en les sommant, les signaux c$_1$ et c$_2$ pondérés par les deuxièmes vecteurs de pondérations $\left( w_2^*, -w_1^* \right)$ pour former un signal combiné c$_2$.

Ainsi, on a : $c_2 = w_2^* s_1 - w_1^* s_2$.

On obtient donc deux signaux c$_1$ et c$_2$ dont les bruits sont non corrélés car orthogonaux.

Ensuite, une étape de normalisation (non représentée) des bruits des signaux combinés (c$_1$; c$_2$) pour former

deux signaux (r' ; r") dont les bruits sont indépendants et de normes moyennes égales est réalisée.

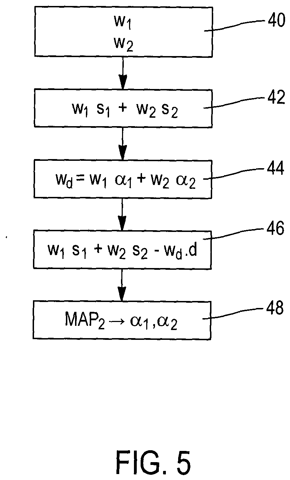

Les étapes suivantes du procédé sont décrites en référence à l'organigramme de la figure 5.

On note $(\alpha_1, \alpha_2)$ les coefficients respectifs du canal vu par le signal utile associé à une antenne (4, 6) respective du récepteur (2).

Les vecteurs $\alpha_1$, $\alpha_2$ sont calculés en utilisant l'approche MAP.

Lors d'une première étape 40, le module de réduction d'interférences 14 pondère les signaux reçus $s_1$ et $s_2$ respectivement par des vecteurs de pondération $w_1$ et $w_2$ précédemment déterminés.

A l'étape 42, le module de réduction d'interférences 14 combine, ici en les sommant, les signaux $s_1$ et $s_2$ pondérés pour former un signal combiné $c_1$.

Ainsi, on obtient le signal : $c_1 = w_1 s_1 + w_2 s_2$.

A l'étape 44, le module de réduction d'interférences 14 pondère un signal de référence d, comprenant les symboles pilotes, avec un autre vecteur de pondération $\mathbf{w}_d$.

On observe que $\mathbf{w}_d$ peut être obtenu par combinaison d'une pondération du premier vecteur de pondération $(w_1, w_2)$ déterminé lors de l'étape de détermination (28) de l'étape de blanchiment E1 par le vecteur de canal $(\alpha_1, \alpha_2)$. Ainsi, idéalement : $\mathbf{w}_d = w_1 \alpha_1 + w_2 \alpha_2$

Les vecteurs $\alpha_1$, $\alpha_2$ sont des vecteurs colonnes contenant chacun autant de lignes que le signal reçu dans une trame contient de symboles, soit n lignes.

A l'étape 46, le module de réduction d'interférences 14 détermine une erreur $\varepsilon$ correspondant à la différence entre le signal combiné obtenu $c_1 = w_1 s_1 + w_2 s_2$ et le signal de référence d pondéré de $\mathbf{w}_d = w_1 \alpha_1 + w_2 \alpha_2$.

Ainsi en notant $\alpha$ le vecteur consistant en une concaténation des vecteurs $w_1$, $w_2$ et $\mathbf{w}_d = w_1 \alpha_1 + w_2 \alpha_2$ et la matrice comprenant les signaux reçus comme précédemment définie, on a toujours l'erreur $\varepsilon$ qui est le vecteur exprimé par $\varepsilon = \mathbf{R}.\alpha$.

A l'étape 48, le module de réduction d'interférences 14 calcule les vecteurs $\alpha_1$, $\alpha_2$ en utilisant l'approche MAP.

Cette approche consiste à maximiser la probabilité de réalisation du vecteur de pondération $\alpha$. Cette probabilité est conditionnelle à l'observation de l'erreur $\varepsilon$.

En utilisant la formule de Bayes, cette probabilité est égale à la probabilité que l'erreur $\varepsilon$ est observée conditionnellement à la probabilité que la pondération est égale au vecteur $\alpha$, cette probabilité conditionnelle étant multipliée par la probabilité que le vecteur de pondération $\alpha$ se réalise. Cela est exprimé par la relation suivante :

$$P(\alpha) = f(\alpha / \varepsilon) \propto f(\varepsilon / \alpha) \cdot f(\alpha),$$

dans laquelle P et f indiquent des probabilités et le symbole $\propto$ indique la relation « équivalent à ».

Comme précédemment, les limites du spectre de fréquences et de la réponse temporelle du canal sont connues du récepteur 2 et sont stockées dans la mémoire 8.

Ces caractéristiques du canal de propagation sont représentées par une matrice dite matrice globale de covariance $G_2$.

$$\begin{cases} \mathbf{G}_2 = \begin{pmatrix} \mathbf{G}_B & 0 \\ 0 & \mathbf{G}_B \end{pmatrix} \\ \mathbf{G}_B = \mathbf{C}_B.\mathbf{\Lambda}_B.\mathbf{C}_B^H \Rightarrow \mathbf{G}_B^{-1} = \mathbf{C}_B.\mathbf{\Lambda}_B^{-1}.\mathbf{C}_B^H \end{cases}$$

En raison des contraintes exprimées dans la matrice globale de covariance $G_2$, la probabilité d'occurrence du vecteur de pondération $\alpha$ est donnée par l'expression :

$$f(\alpha) = \beta' \times e^{-\frac{1}{2} \alpha^H \mathbf{G}_2^{-1} \alpha}$$

dans laquelle $\beta'$ est une constante.

En outre, sous l'hypothèse que le bruit du canal est de type gaussien, la probabilité conditionnelle d'observation de l'erreur $\varepsilon$ est donnée par l'expression :

$$f(\alpha / w) = \alpha' \times e^{-\|\mathbf{R} \cdot \alpha\|^2 / (2.\sigma'^2)}$$

dans laquelle $\alpha'$ st une constante et $\sigma'^2$ représente la variance du bruit dans le signal correspondant aux signaux reçus sur les différentes antennes pondérés et combinés.

Ainsi la probabilité de réalisation, exprimant le critère MAP, du vecteur de pondération $\alpha$ est donnée par l'expression [1] suivante :

$$P(\alpha) = \alpha' \times e^{-\frac{\|\mathbf{R} \cdot \alpha\|^2}{(2.\sigma^2)}} \times \beta' \times e^{-\frac{1}{2}.\alpha^H \mathbf{G}_2^{-1} \alpha} \quad [4]$$

En prenant l'opposé du logarithme de l'expression [4] on obtient l'expression [5] suivante :

$$L(P(\alpha)) = \frac{\|\mathbf{R}.\alpha\|^2}{\sigma^2} + \alpha^H \mathbf{G}_2^{-1}\alpha + cst' \quad [5]$$

dans laquelle *cst'* désigne une valeur constante.

Le module de réduction d'interférences 14 cherche à minimiser ce logarithme $L(P(\alpha))$, ce qui revient à minimiser :

$$\frac{\left\| \begin{bmatrix} w_1 & w_2 \end{bmatrix} \begin{bmatrix} s_1 \\ s_2 \end{bmatrix} - d.\begin{bmatrix} w_1 & w_2 \end{bmatrix} \begin{bmatrix} \alpha_1 \\ \alpha_2 \end{bmatrix} \right\|^2}{\|b_{\min}\|^2} + \frac{\left\| \begin{bmatrix} w_2^* & -w_1^* \end{bmatrix} \begin{bmatrix} \vec{s_1} \\ s_2 \end{bmatrix} - d.\begin{bmatrix} w_2^* & -w_1^* \end{bmatrix} \begin{bmatrix} \alpha_1 \\ \alpha_2 \end{bmatrix} \right\|^2}{\|b_{\max}\|^2} + \begin{bmatrix} \alpha_1^* & \alpha_2^* \end{bmatrix} \begin{bmatrix} G_B^{-1} & 0 \\ 0 & G_B^{-1} \end{bmatrix} \begin{bmatrix} \alpha_1 \\ \alpha_2 \end{bmatrix}$$

Avec $b_{\min}$ le bruit plus interférences le long de l'axe DIRmin et $b_{\max}$ le bruit plus interférences le long de l'axe DIRmax.

La résolution de cette équation permet de trouver les coefficients $\alpha_1$, $\alpha_2$.

Pour minimiser l'expression précédente, on va simplement annuler son gradient.

On obtient donc la relation suivante qui permettra de trouver $\alpha_1$ et $\alpha_2$:

$$-\left( \frac{1}{\|b_{\min}\|^2}.\begin{bmatrix} w_1^* \\ w_2^* \end{bmatrix}.d^H.\begin{bmatrix} w_1 & w_2 \end{bmatrix} + \frac{1}{\|b_{\max}\|^2}.\begin{bmatrix} w_2 \\ -w_1 \end{bmatrix}.d^H.\begin{bmatrix} w_2^* & -w_1^* \end{bmatrix} \right)\left( \begin{bmatrix} s_1 \\ s_2 \end{bmatrix} - d.\begin{bmatrix} \alpha_1 \\ \alpha_2 \end{bmatrix} \right) + \begin{bmatrix} G_B^{-1} & 0 \\ 0 & G_B^{-1} \end{bmatrix}.\begin{bmatrix} \alpha_1 \\ \alpha_2 \end{bmatrix} = 0$$

Pour cela, de la même façon que précédemment, nous allons poser :

$$z = \begin{bmatrix} z_1 \\ z_2 \end{bmatrix} = \mathbf{C}_2^H \begin{bmatrix} \alpha_1 \\ \alpha_2 \end{bmatrix} = \begin{bmatrix} \mathbf{C}_B^H & 0 \\ 0 & \mathbf{C}_B^H \end{bmatrix} \begin{bmatrix} \alpha_1 \\ \alpha_2 \end{bmatrix}$$

Ainsi, l'équation devient :

$$\left( \frac{1}{\|b_{\min}\|^2}.\begin{bmatrix} w_1^* \\ w_2^* \end{bmatrix}.d^H.\begin{bmatrix} w_1 & w_2 \end{bmatrix} + \frac{1}{\|b_{\max}\|^2}.\begin{bmatrix} w_2 \\ -w_1 \end{bmatrix}.d^H.\begin{bmatrix} w_2^* & -w_1^* \end{bmatrix} \right)\left( \begin{bmatrix} s_1 \\ s_2 \end{bmatrix} - d.\begin{bmatrix} \mathbf{C}_B & 0 \\ 0 & \mathbf{C}_B \end{bmatrix}\begin{bmatrix} z_1 \\ z_2 \end{bmatrix} \right) = \begin{bmatrix} \mathbf{C}_B.\Lambda_B^{-1} & 0 \\ 0 & \mathbf{C}_B.\Lambda_B^{-1} \end{bmatrix}\begin{bmatrix} z_1 \\ z_2 \end{bmatrix}$$

avec :

$$\begin{bmatrix} \alpha_1 \\ \alpha_2 \end{bmatrix} = \begin{bmatrix} \mathbf{C}_B & 0 \\ 0 & \mathbf{C}_B \end{bmatrix}\begin{bmatrix} z_1 \\ z_2 \end{bmatrix}$$

Ceci nous permet donc d'obtenir $\alpha_1$ et $\alpha_2$.

Toutes les remarques précédentes sur la séparabilité temps/fréquence des matrices de covariance $G_B$, et donc $C_B$, ainsi que la réduction de ces matrices avec C' peuvent alors s'appliquer.

Seules les matrices $G_B$ et $C_B$ apparaissent dans les calculs. Les matrices $G_D$ et $C_D$ n'apparaissent plus dans les calculs.

Comme précédemment, les matrices $G_{B,T}$ $G_{B,F}$, puis $G'_{B,T}$ $G'_{B,F}$, sont de nouveau introduites. Toutes les méthodes de résolution du système présentées dans la première résolution de Maximum A Posteriori peuvent s'appliquer de la même façon (avec la matrice $G_D$ en moins).

Selon une réalisation, la complexité du calcul est encore réduite en retenant uniquement certaines valeurs propres de la matrice de covariance $\mathbf{G_2}$ ainsi que les valeurs propres correspondantes. Dans ce cas, une matrice $\mathbf{C'}$ est extraite à partir de la matrice $\mathbf{C_2}$ et une matrice $\Lambda'$ est extraite à partir de la matrice $\Lambda_2$, la matrice $\Lambda'$ comprenant un nombre déterminé n' de valeurs propres de $\Lambda_2$ et la matrice $\mathbf{C'}$ comprenant les vecteurs propres associés à ces n' valeurs propres. Le vecteur de pondération $\alpha$ est alors déterminé à l'aide des matrices de vecteurs propres $\mathbf{C'}$ et de valeurs propres $\Lambda'$.

Dans une réalisation préférée, la matrice de covariance $\mathbf{G_2}$ est une matrice diagonale par bloc, constituée des matrices $\mathbf{G_B}$, $\mathbf{G_B}$, et pour laquelle chacune des matrices $\mathbf{G_B}$ est le produit de Kronecker d'une matrice $\mathbf{G}_{B,T}$, de covariance dans le domaine temporel et d'une matrice $\mathbf{G}_{B,F}$, de covariance dans le domaine fréquentiel et l'étape de détermination comprend les sous-étapes de :

- décomposition des matrices $\mathbf{G}_{B,T}$ et $\mathbf{G}_{B,F}$ de covariance en vecteurs propres selon les relations $\mathbf{G}_{B,T} = \mathbf{C}_{B,T}\Lambda_{B,T}\mathbf{C}_{B,T}{}^H$ et $\mathbf{G}_{B,F} = \mathbf{C}_{B,F}\Lambda_{B,F}\mathbf{C}_{B,F}{}^H$, dans lesquelles :

    - $\mathbf{C}_{B,T}$ est une matrice de vecteurs propres de la matrice $\mathbf{G}_{B,T}$ ;
    - $\Lambda_{B,T}$ est une matrice diagonale comprenant des valeurs propres associées aux vecteurs propres de la matrice $\mathbf{G}_{B,T}$;
    - $\mathbf{C}_{B,F}$ est une matrice de vecteurs propres de la matrice $\mathbf{G}_{B,F}$; et
    - $\Lambda_{B,F}$ est une matrice diagonale comprenant des valeurs propres associées aux vecteurs propres de la matrice $\mathbf{G}_{B,F}$ ;

- extraction d'une matrice $\mathbf{C}'_{B,T}$ à partir de la matrice $\mathbf{C}_{B,T}$ et d'une matrice $\mathbf{\Lambda}'_{B,T}$ à partir de la matrice $\Lambda_{B,T}$, la matrice $\mathbf{\Lambda}'_{B,T}$ comprenant un nombre déterminé $n_{Bt}$' des valeurs propres les plus grandes de $\Lambda_{B,T}$ et la matrice $\mathbf{C}'_{B,T}$ comprenant les vecteurs propres associés à ces $n_{Bt}$' valeurs propres les plus grandes; et

- extraction d'une matrice $\mathbf{C}'_{B,F}$ à partir de la matrice $\mathbf{C}_{B,F}$ et d'une matrice $\mathbf{\Lambda}'_{B,F}$ à partir de la matrice $\Lambda_{B,F}$, la matrice $\mathbf{\Lambda}'_{B,F}$ comprenant un nombre déterminé $n_{Bf}$' des valeurs propres les plus grandes de $\Lambda_{B,F}$ et la matrice $\mathbf{C}'_{B,F}$ comprenant les vecteurs propres associés à ces $n_{Bf}$' valeurs propres les plus grandes,

Le vecteur de pondération $\alpha$ est alors déterminé à l'aide des matrices de vecteurs propres $\mathbf{C}'_{B,T}$, $\mathbf{C}'_{B,F}$, de valeurs propres $\mathbf{\Lambda}'_{B,T}$, $\mathbf{\Lambda}'_{B,F}$.

Les coefficients $\alpha_1$, $\alpha_2$ sont ensuite utilisés dans l'étape de démodulation de signal à combinaison maximale de rapport signal à bruit des deux signaux (r', r'').

Bien sûr, l'invention n'est pas limitée aux exemples qui viennent d'être décrits et de nombreux aménagements peuvent être apportés à ces exemples sans sortir du cadre de l'invention.

En particulier, l'approche a été décrite pour deux antennes mais est généralisable à un plus grand nombre d'antennes.

**Revendications**

1. Procédé de démodulation d'un signal dans un récepteur (2) comprenant au moins deux antennes (4, 6) recevant chacune un signal ($s_1$; $s_2$) transmis à travers un canal de propagation radioélectrique associé, les signaux reçus ($s_1$ ; $s_2$) correspondant à un même signal émis (s) comprenant des trames de symboles réparties en temps et en fréquence dans lesquelles certains symboles, dits symboles pilotes, sont connus du récepteur, ledit procédé comprenant des étapes de :

- blanchiment (E1) de bruit pour former deux signaux combinés ($c_1$; $c_2$) dont les bruits sont indépendants ;
- normalisation des bruits des signaux combinés ($c_1$; $c_2$) pour former deux signaux (r' ; r") dont les bruits sont indépendants et de normes moyennes égales ;
- étape de démodulation de signal à combinaison maximale de rapport signal à bruit des deux signaux à bruit indépendants et de normes moyennes égales (r' ; r")

**caractérisé en ce que** la première étape de blanchiment de bruit pour former les deux signaux combinés ($c_1$; $c_2$) comprend des sous-étapes de :

- pondération (20) de chacun des signaux reçus ($s_1$; $s_2$) avec de premiers vecteurs de pondération ($w_1$ ; $w_2$) respectifs associés à une antenne (4,6) respective du récepteur (2), le signal associé à la première antenne étant pondéré par un vecteur $w_1$ et le signal associé à la deuxième antenne étant pondéré par un vecteur $w_2$,
- combinaison (22) des signaux reçus pondérés pour former un premier signal combiné ($c_1$),
- pondération (24) d'un signal de référence (d) comprenant lesdits symboles pilotes avec un autre vecteur de pondération ($w_d$),
- comparaison (26) du premier signal combiné (c1) et du signal de référence pondéré pour former une erreur ($\varepsilon$), et
- détermination (28) des vecteurs de pondération ($w_1$ ; $w_2$) à l'aide du critère du maximum a posteriori ($MAP_1$) en maximisant la probabilité de réalisation desdits vecteurs de pondération conditionnellement à l'erreur obtenue,

- pondération (30) de chaque signal reçu ($s_1$, $s_2$) avec des deuxièmes vecteurs de pondération $\left( w_2^*, - w_1^* \right)$, le signal reçu sur la première antenne étant pondéré par le conjugué du vecteur complexe $w_2$ et le signal reçu sur la deuxième antenne étant pondéré par l'opposé du conjugué du vecteur complexe $w_1$,
- combinaison (32) des signaux reçus ($s_1$, $s_2$) pondérés par les deuxièmes vecteurs de pondération pour former un deuxième signal combiné ($c_2$).

2. Procédé selon la revendication 1, **caractérisé en ce que** les coefficients respectifs ($\alpha_1$ et $\alpha_2$) du canal vu par le signal utile associé à une antenne (4, 6) respective du récepteur (2) et utilisés dans l'étape de démodulation de signal à combinaison maximale de rapport signal à bruit des deux signaux, r' et r", obtenus à l'issue de l'étape de blanchiment du bruit, sont déterminés à l'aide du critère du maximum a posteriori en maximisant la probabilité de réalisation du canal ($\alpha_1$ et $\alpha_2$) conditionnellement à l'erreur présente d'une part dans le signal $c_1$ et d'autre part dans le signal $c_2$, en prenant en compte le canal de propagation vu dans le signal $c_1$ et dans le signal $c_2$.

3. Procédé selon la revendication 1 ou 2, dans lequel l'étape de détermination (28) de l'étape de blanchiment (E1) comprend des sous-étapes de :

- calcul d'une matrice de covariance $\mathbf{G}_B$ du canal de propagation ;
- calcul d'une matrice de covariance $\mathbf{G}_D$ du produit symbole par symbole de deux canaux de propagation; et
- détermination des vecteurs de pondération à l'aide des matrices de covariance $\mathbf{G}_B$ et $\mathbf{G}_D$.

4. Procédé selon la revendication 3, dans lequel l'étape de détermination (28) de l'étape de blanchiment (E1) comprend en outre une sous-étape de décomposition de la matrice de covariance $\mathbf{G}_B$ en vecteurs propres selon la relation $\mathbf{G}_B = \mathbf{C}_B \Lambda_B \mathbf{C}_B^H$ dans laquelle $\mathbf{C}_B$ est une matrice de vecteurs propres de la matrice $\mathbf{G}_B$ et $\Lambda_B$ est une matrice diagonale comprenant des valeurs propres associées aux vecteurs propres de la matrice $\mathbf{G}_B$ et une sous-étape de décomposition de la matrice de covariance $\mathbf{G}_D$ en vecteurs propres selon la relation $\mathbf{G}_D = \mathbf{C}_D \Lambda_D \mathbf{C}_D^H$ dans laquelle $\mathbf{C}_D$ est une matrice de vecteurs propres de la matrice $\mathbf{G}_D$ et $\Lambda_D$ est une matrice diagonale comprenant des valeurs propres associées aux vecteurs propres de la matrice $\mathbf{G}_D$.

5. Procédé selon la revendication 4, dans lequel l'étape de détermination (28) de l'étape de blanchiment (E1) comprend en outre une sous-étape d'extraction d'une matrice $\mathbf{C}'_B$ à partir de la matrice $\mathbf{C}_B$ et d'une matrice $\mathbf{\Lambda}'_B$ à partir de la matrice $\Lambda_B$, la matrice $\mathbf{\Lambda}'_B$ comprenant un nombre déterminé $n_B$' de valeurs propres de $\Lambda_B$ et la matrice $\mathbf{C}'_B$ comprenant les vecteurs propres associés à ces $n_B$' valeurs propres, et une sous-étape d'extraction d'une matrice

$\mathbf{C}'_D$ à partir de la matrice $\mathbf{C}_D$ et d'une matrice $\mathbf{\Lambda}'_D$ à partir de la matrice $\Lambda_D$, la matrice $\mathbf{\Lambda}'_D$ comprenant un nombre déterminé $n_D$' de valeurs propres de $\Lambda_D$ et la matrice $\mathbf{C}'_D$ comprenant les vecteurs propres associés à ces $n_D$' valeurs propres, les vecteurs de pondération étant alors déterminés à l'aide des matrices de vecteurs propres $\mathbf{C}'_B$ et $\mathbf{C}'_D$ et de valeurs propres $\mathbf{\Lambda}'_B$ et $\mathbf{\Lambda}'_D$.

**6.** Procédé selon la revendication 4, dans lequel la matrice de covariance $\mathbf{G}_B$ est le produit de Kronecker d'une matrice $\mathbf{G}_{B,T}$ de covariance dans le domaine temporel et d'une matrice $\mathbf{G}_{B,F}$ de covariance dans le domaine fréquentiel et la matrice de covariance $\mathbf{G}_D$ est le produit de Kronecker d'une matrice $\mathbf{G}_{D,T}$ de covariance dans le domaine temporel et d'une matrice $\mathbf{G}_{D,F}$ de covariance dans le domaine fréquentiel et l'étape de détermination (28) comprend les sous-étapes de :

- décomposition des matrices $\mathbf{G}_{B,T}$ et $\mathbf{G}_{B,F}$ de covariance en vecteurs propres selon les relations $\mathbf{G}_{B,T} = \mathbf{C}_{B,T}\Lambda_{B,T}\mathbf{C}_{B,T}{}^H$ et $\mathbf{G}_{B,F} = \mathbf{C}_{B,F}\Lambda_{B,F}\mathbf{C}_{B,F}{}^H$, dans lesquelles :

    - $\mathbf{C}_{B,T}$ est une matrice de vecteurs propres de la matrice $\mathbf{G}_{B,T}$;
    - $\Lambda_{B,T}$ est une matrice diagonale comprenant des valeurs propres associées aux vecteurs propres de la matrice $\mathbf{G}_{B,T}$;
    - $\mathbf{C}_{B,F}$ est une matrice de vecteurs propres de la matrice $\mathbf{G}_{B,F}$ ; et
    - $\Lambda_{B,F}$ est une matrice diagonale comprenant des valeurs propres associées aux vecteurs propres de la matrice $\mathbf{G}_{B,F}$;

- extraction d'une matrice $\mathbf{C}'_{B,T}$ à partir de la matrice $\mathbf{C}_{B,T}$ et d'une matrice $\mathbf{\Lambda}'_{B,T}$ à partir de la matrice $\Lambda_{B,T}$, la matrice $\mathbf{\Lambda}'_{B,T}$ comprenant un nombre déterminé $n_{Bt}$' de valeurs propres les plus grandes de $\Lambda_{B,T}$ et la matrice $\mathbf{C}'_{B,T}$ comprenant les vecteurs propres associés à ces $n_{Bt}$' valeurs propres les plus grandes;

- extraction d'une matrice $\mathbf{C}'_{B,F}$ à partir de la matrice $\mathbf{C}_{B,F}$ et d'une matrice $\mathbf{\Lambda}'_{B,F}$ à partir de la matrice $\Lambda_{B,F}$, la matrice $\mathbf{\Lambda}'_{B,F}$ comprenant un nombre déterminé $n_{Bf}$' de valeurs propres les plus grandes de $\Lambda_{B,F}$ et la matrice $\mathbf{C}'_{B,F}$ comprenant les vecteurs propres associés à ces $n_{Bf}$' valeurs propres les plus grandes,

- décomposition des matrices $\mathbf{G}_{D,T}$ et $\mathbf{G}_{D,F}$ de covariance en vecteurs propres selon les relations $\mathbf{G}_{D,T} = \mathbf{C}_{D,T}\Lambda_{D,T}\mathbf{C}_{D,T}{}^H$ et $\mathbf{G}_{D,F} = \mathbf{C}_{D,F}\Lambda_{D,F}\mathbf{C}_{D,F}{}^H$, dans lesquelles :

    - $\mathbf{C}_{D,T}$ est une matrice de vecteurs propres de la matrice $\mathbf{G}_{D,T}$ ;
    - $\Lambda_{D,T}$ est une matrice diagonale comprenant des valeurs propres associées aux vecteurs propres de la matrice $\mathbf{G}_{D,T}$ ;
    - $\mathbf{C}_{D,F}$ est une matrice de vecteurs propres de la matrice $\mathbf{G}_{D,F}$; et
    - $\Lambda_{D,F}$ est une matrice diagonale comprenant des valeurs propres associées aux vecteurs propres de la matrice $\mathbf{G}_{D,F}$ ;

- extraction d'une matrice $\mathbf{C}'_{D,T}$ à partir de la matrice $\mathbf{C}_{D,T}$ et d'une matrice $\mathbf{\Lambda}'_{D,T}$ à partir de la matrice $\Lambda_{D,T}$, la matrice $\mathbf{\Lambda}'_{D,T}$ comprenant un nombre déterminé $n_{Dt}$' de valeurs propres les plus grandes de $\Lambda_{D,T}$ et la matrice $\mathbf{C}'_{D,T}$ comprenant les vecteurs propres associés à ces $n_{Dt}$' valeurs propres les plus grandes; et

- extraction d'une matrice $\mathbf{C}'_{D,F}$ à partir de la matrice $\mathbf{C}_{D,F}$ et d'une matrice $\mathbf{\Lambda}'_{D,F}$ à partir de la matrice $\Lambda_{D,F}$, la matrice $\mathbf{\Lambda}'_{D,F}$ comprenant un nombre déterminé $n_{Df}$' de valeurs propres les plus grandes de $\Lambda_{D,F}$ et la matrice $\mathbf{C}'_{D,F}$ comprenant les vecteurs propres associés à ces $n_{Df}$' valeurs propres les plus grandes,

les vecteurs de pondération étant alors déterminés à l'aide des matrices de vecteurs propres $\mathbf{C}'_{B,T}$, $\mathbf{C}'_{B,F}$, $\mathbf{C}'_{D,T}$, $\mathbf{C}'_{D,F}$ et de valeurs propres $\mathbf{\Lambda}'_{B,T}$, $\mathbf{\Lambda}'_{B,F}$, $\mathbf{\Lambda}'_{D,T}$, $\mathbf{\Lambda}'_{D,F}$.

7. Procédé selon l'une quelconque des revendications 2 à 6, **caractérisé en ce que** l'étape de détermination de l'étape de démodulation de signal comprend des sous-étapes de :

- calcul d'une matrice de covariance $\mathbf{G}_B$ du canal de propagation ;
- détermination des vecteurs de pondération à l'aide de la matrice de covariance $\mathbf{G}_B$.

8. Procédé selon la revendication 7, dans lequel l'étape de détermination de l'étape de démodulation de signal comprend en outre une sous-étape de décomposition de la matrice de covariance $\mathbf{G}_B$ en vecteurs propres selon la relation $\mathbf{G}_B = \mathbf{C}_B \Lambda_B \mathbf{C}_B^H$ dans laquelle $\mathbf{C}_B$ est une matrice de vecteurs propres de la matrice $\mathbf{G}_B$ et $\Lambda_B$ est une matrice diagonale comprenant des valeurs propres associées aux vecteurs propres de la matrice $\mathbf{G}_B$.

9. Procédé selon la revendication 8, dans lequel l'étape de détermination de l'étape de démodulation de signal comprend en outre une sous-étape d'extraction d'une matrice $\mathbf{C}'_B$ à partir de la matrice $\mathbf{C}_B$ et d'une matrice $\mathbf{\Lambda}'_B$ à partir de la matrice $\Lambda_B$, la matrice $\mathbf{\Lambda}'_B$ comprenant un nombre déterminé $n_B'$ de valeurs propres de $\Lambda_B$ et la matrice $\mathbf{C}'_B$ comprenant les vecteurs propres associés à ces $n_B'$ valeurs propres, les vecteurs de pondération étant alors déterminés à l'aide de la matrice de vecteurs propres $\mathbf{C}'_B$ et de valeurs propres $\mathbf{\Lambda}'_B$.

10. Procédé selon la revendication 8, dans lequel dans lequel la matrice de covariance $\mathbf{G}_B$ est le produit de Kronecker d'une matrice $\mathbf{G}_{B,T}$ de covariance dans le domaine temporel et d'une matrice $\mathbf{G}_{B,F}$ de covariance dans le domaine fréquentiel et l'étape de détermination de l'étape de démodulation de signal comprend les sous-étapes de :

- décomposition des matrices $\mathbf{G}_{B,T}$ et $\mathbf{G}_{B,F}$ de covariance en vecteurs propres selon les relations $\mathbf{G}_{B,T} = \mathbf{C}_{B,T} \Lambda_{B,T} \mathbf{C}_{B,T}^H$ et $\mathbf{G}_{B,F} = \mathbf{C}_{B,F} \Lambda_{B,F} \mathbf{C}_{B,F}^H$, dans lesquelles :

   - $\mathbf{C}_{B,T}$ est une matrice de vecteurs propres de la matrice $\mathbf{G}_{B,T}$;
   - $\Lambda_{B,T}$ est une matrice diagonale comprenant des valeurs propres associées aux vecteurs propres de la matrice $\mathbf{G}_{B,T}$;
   - $\mathbf{C}_{B,F}$ est une matrice de vecteurs propres de la matrice $\mathbf{G}_{B,F}$ ; et
   - $\Lambda_{B,F}$ est une matrice diagonale comprenant des valeurs propres associées aux vecteurs propres de la matrice $\mathbf{G}_{B,F}$ ;

- extraction d'une matrice $\mathbf{C}'_{B,T}$ à partir de la matrice $\mathbf{C}_{B,T}$ et d'une matrice $\mathbf{\Lambda}'_{B,T}$ à partir de la matrice $\Lambda_{B,T}$, la matrice $\mathbf{\Lambda}'_{B,T}$ comprenant un nombre déterminé $n_{Bt}'$ de valeurs propres les plus grandes de $\Lambda_{B,T}$ et la matrice $\mathbf{C}'_{B,T}$ comprenant les vecteurs propres associés à ces $n_{Bt}'$ valeurs propres les plus grandes;
- extraction d'une matrice $\mathbf{C}'_{B,F}$ à partir de la matrice $\mathbf{C}_{B,F}$ et d'une matrice $\mathbf{\Lambda}'_{B,F}$ à partir de la matrice $\Lambda_{B,F}$, la matrice $\mathbf{\Lambda}'_{B,F}$ comprenant un nombre déterminé $n_{Bf}'$ de valeurs propres les plus grandes de $\Lambda_{B,F}$ et la matrice $\mathbf{C}'_{B,F}$ comprenant les vecteurs propres associés à ces $n_{Bf}'$ valeurs propres les plus grandes,

les vecteurs de pondération étant alors déterminés à l'aide des matrices de vecteurs propres $\mathbf{C}'_{B,T}$, $\mathbf{C}'_{B,F}$ et de valeurs propres $\mathbf{\Lambda}'_{B,T}$, $\mathbf{\Lambda}'_{B,F}$.

11. Procédé selon l'une quelconque des revendications précédentes, dans lequel le signal émis est un signal multiporteuses, notamment un signal OFDM.

**12.** Equipement récepteur (2) comprenant au moins deux antennes (4, 6) recevant chacune un signal ($s_1$; $s_2$) transmis à travers un canal de propagation radioélectrique associé, les signaux reçus ($s_1$; $s_2$) correspondant à un même signal émis (s) comprenant des trames de symboles réparties en temps et en fréquence dans lesquelles certains symboles, dits symboles pilotes, sont connus du récepteur, ledit procédé comprenant des moyens de :

- blanchiment (E1) de bruit pour former deux signaux combinés ($c_1$; $c_2$) dont les bruits sont indépendants ;
- normalisation des bruits des signaux combinés ($c_1$; $c_2$) pour former deux signaux (r' ; r") dont les bruits sont indépendants et de normes moyennes égales ;
- démodulation de signal à combinaison maximale de rapport signal à bruit des deux signaux à bruits indépendants et de normes moyennes égales (r' ; r")

**caractérisé en ce que** le moyen de blanchiment de bruit pour former les deux signaux combinés ($c_1$ ; $c_2$) comprend des moyens de :

- pondération de chacun des signaux reçus ($s_1$; $s_2$) avec de premiers vecteurs de pondération ($w_1$ ; $w_2$) respectifs associés à une antenne (4,6) respective du récepteur (2),
- combinaison des signaux reçus pondérés pour former un premier signal combiné ($c_1$),
- pondération d'un signal de référence (d) comprenant lesdits symboles pilotes avec un autre vecteur de pondération ($w_d$),
- comparaison du premier signal combiné (c1) et du signal de référence pondéré pour former une erreur ($\varepsilon$), et
- détermination des vecteurs de pondération ($w_1$ ; $w_2$) à l'aide du critère du maximum a posteriori (MAP1) en maximisant la probabilité de réalisation desdits vecteurs de pondération conditionnellement à l'erreur obtenue,
- pondération de chaque signal reçu ($s_1$, $s_2$) avec de deuxièmes vecteurs de pondération ( $w_2^*$ , $-w_1^*$ )

respectifs associés à une antenne (4,6) respective du récepteur (2) tels qu'un vecteur (w1, w2), dit premier vecteur de pondération, formé par les premiers vecteurs de pondération (w1, w2) est orthogonal sur chaque

symbole au vecteur ( $w_2^*$ , $-w_1^*$ ), dit deuxième vecteur de pondération, formé par les deuxièmes vecteurs

de pondération ( $w_2^*$, $-w_1^*$ ),

- combinaison (32) des signaux reçus ($s_1$, $s_2$) pondérés par les deuxièmes vecteurs de pondération pour former un deuxième signal combiné ($c_2$).

**13.** Equipement récepteur selon la revendication 12, **caractérisé en ce qu'**il comprend en outre des moyens de détermination de coefficients respectifs ($\alpha_1$ et $\alpha_2$) du canal vu par le signal utile associé à une antenne (4, 6) respective du récepteur (2) et utilisés dans l'étape de démodulation de signal à combinaison maximale de rapport signal à bruit des deux signaux, r' et r", obtenus à l'issue de l'étape de blanchiment du bruit, sont déterminés à l'aide du critère du maximum a posteriori en maximisant la probabilité de réalisation du canal ($\alpha_1$ et $\alpha_2$) conditionnellement à l'erreur présente d'une part dans le signal $c_1$ et d'autre part dans le signal $c_2$, en prenant en compte le canal de propagation vu dans le signal $c_1$ et dans le signal $c_2$.

**14.** Programme d'ordinateur comportant des instructions pour la mise en oeuvre du procédé selon l'une quelconque des revendications 1 à 11 lorsque le programme est exécuté par au moins un processeur.

**Patentansprüche**

**1.** Demodulationsverfahren eines Signals in einem Empfänger (2), umfassend wenigstens zwei Antennen (4, 6), die jeweils ein Signal ($s_1$; $s_2$) empfangen, das durch einen zugeordneten funkelektrischen Verbreitungskanal übertragen ist, wobei die empfangenen Signale ($s_1$; $s_2$) einem und demselben ausgegebenen Signal (s) entsprechen, das zeitlich und in der Frequenz verteilte Symbolraster umfasst, in denen bestimmte Symbole, bezeichnet als Pilotsymbole, dem Empfänger bekannt sind, wobei das genannte Verfahren die Schritte umfasst:

- Geräuschbereinigung (E1) zum Bilden von zwei kombinierten Signalen ($c_1$; $c_2$), deren Geräusche unabhängig sind;
- Normalisierung der Geräusche der kombinierten Signale ($c_1$; $c_2$) zum Bilden von zwei Signalen (r'; r"), deren Geräusche unabhängig sind und gleiche durchschnittliche Normen aufweisen;

- Signal-Demodulationsschritt mit maximaler Kombination des Signalverhältnisses der zwei unabhängigen Geräuschsignale und gleichen durchschnittlichen Normen (r'; r''),

**dadurch gekennzeichnet, dass** der erste Schritt der Geräuschbereinigung zum Bilden der zwei kombinierten Signale ($c_1$; $c_2$) Teilschritte umfasst:

- Gewichtung (20) jedes der empfangenen Signale ($s_1$; $s_2$) mit jeweiligen ersten Gewichtungsvektoren ($w_1$, $w_2$), die einer jeweiligen Antenne (4, 6) des Empfängers (2) zugeordnet sind, wobei das der ersten Antenne zugeordnete Signal durch einen Vektor $w_1$ gewichtet ist und das der zweiten Antenne zugeordnete Signal durch einen Vektor $w_2$ gewichtet ist,
- Kombination (22) der gewichteten empfangenen Signale zum Bilden eines ersten kombinierten Signals ($c_1$),
- Gewichtung (24) eines Referenzsignals (d), umfassend die genannten Pilotsymbole mit einem anderen Gewichtungsvektor ($w_d$),
- Vergleich (26) des ersten kombinierten Signals (c1) und des gewichteten Referenzsignals zum Bilden eines Fehlers ($\varepsilon$) und
- Bestimmung (28) der Gewichtungsvektoren ($w_1$; $w_2$) mithilfe des Kriteriums des nachträglichen Maximums ($MAP_1$) durch Maximieren der Realisierungswahrscheinlichkeit der genannten Gewichtungsvektoren, bedingt durch den erhaltenen Fehler,
- Gewichtung (30) jedes empfangenen Signals ($s_1$; $s_2$) mit zweiten Gewichtungsvektoren $\left(w^*_2, \ -w^*_1\right)$, wobei das auf der ersten Antenne empfangene Signal durch die konjugierte komplexe Zahl des komplexen Vektors $w_2$ gewichtet ist und das auf der zweiten Antenne empfangene Signal durch den Gegensatz der konjugierten komplexen Zahl des komplexen Vektors $w_1$ gewichtet ist,
- Kombination (32) der gewichteten empfangenen Signale ($s_1$; $s_2$) durch die zweiten Gewichtungsvektoren zum Bilden eines zweiten kombinierten Signals ($c_2$).

2. Verfahren gemäß Anspruch 1, **dadurch gekennzeichnet, dass** die jeweiligen Koeffizienten ($\alpha_1$ und $\alpha_2$) des Kanals, gesehen vom Nutzsignal, das einer jeweiligen Antenne (4, 6) des Empfängers (2) zugeordnet ist, und die im Signal-Demodulationsschritt mit maximaler Kombination des Geräusch-Signalverhältnisses der zwei Signale verwendet sind, r' und r'', die nach Abschluss des Schritts der Geräuschbereinigung erhalten sind, mithilfe des Kriteriums des nachträglichen Maximums durch Maximieren der Realisierungswahrscheinlichkeit des Kanals ($\alpha_1$ und $\alpha_2$) bedingt durch den Fehler bestimmt sind; der einerseits im Signal $c_1$ und andererseits im Signal $c_2$ vorhanden ist, indem der Verbreitungskanal gesehen in dem Signal $c_1$ und in dem Signal $c_2$ berücksichtigt wird.

3. Verfahren gemäß Anspruch 1 oder 2, bei dem der Bestimmungsschritt (28) des Bereinigungsschritts (E1) Teilschritte umfasst:

- Berechnung einer Kovarianz-Matrix $G_B$ des Verbreitungskanals;
- Berechnung einer Kovarianz-Matrix $G_D$ des Symbolprodukts pro Symbol von zwei Verbreitungskanälen; und
- Bestimmung der Gewichtungsvektoren mithilfe der Kovarianz-Matrizen $G_B$ und $G_D$.

4. Verfahren gemäß Anspruch 3, bei dem der Bestimmungsschritt (28) des Bereinigungsschritts (E1) darüber hinaus einen Zersetzungs-Teilschritt der Kovarianz-Matrix $G_B$ in eigene Vektoren gemäß der Beziehung $G_B = C_B \Lambda_B C_B^H$ umfasst, bei dem $C_B$ eine Matrix aus eigenen Vektoren der Matrix $G_B$ und $\Lambda_B$ eine diagonale Matrix ist, die eigene Werte umfasst, die den eigenen Vektoren der Matrix $G_B$ zugeordnet sind, und einen Zersetzungs-Teilschritt der Kovarianz-Matrix $G_D$ in eigene Vektoren gemäß der Beziehung $G_D = C_D \Lambda_D C_D^H$ umfasst, bei der $C_D$ eine Matrix aus eigenen Vektoren der Matrix $G_D$ ist und $\Lambda_D$ eine diagonale Matrix ist, die eigene Werte umfasst, die den eigenen Vektoren der Matrix $G_D$ zugeordnet sind.

5. Verfahren gemäß Anspruch 4, bei dem der Bestimmungsschritt (28) des Bereinigungsschritts (E1) darüber hinaus einen Extraktions-Teilschritt einer Matrix $C'_B$ ausgehend von der Matrix $C_B$ und einer Matrix $\Lambda'_B$ ausgehend von der Matrix $\Lambda_B$ aufweist, wobei die Matrix $\Lambda'_B$ eine bestimmte Zahl $n_B'$ von eigenen Werten von $\Lambda_B$ umfasst, und die Matrix $C'_B$ die eigenen Vektoren umfasst, die diesen $n'_B$ eigenen Werten zugeordnet sind, und einen Extraktions-Teilschritt einer Matrix $C'_D$ ausgehend von der Matrix $C_D$ und einer Matrix $\Lambda'_D$ ausgehend von der Matrix $\Lambda_D$ umfasst, wobei die Matrix $\Lambda'_D$ eine bestimmte Zahl $n_D'$ von eigenen Werten von $\Lambda_D$ umfasst, und die Matrix $C'_D$ die eigenen Vektoren umfasst, die diesen eigenen $n'_D$ Werten zugeordnet sind, wobei die Gewichtungswerte dann mithilfe der eigenen Vektormatrizen $C'_B$ und $C'_D$ und der eigenen Werte $\Lambda'_B$ und $\Lambda'_D$ bestimmt sind.

6. Verfahren gemäß Anspruch 4, bei dem die Kovarianz-Matrix $G_B$ das Kronecker-Produkt einer Kovarianz-Matrix $G_{B,T}$ in der zeitlichen Domäne und einer Kronecker-Matrix $G_{B,F}$ in der Frequenzdomäne ist und die Kovarianz-Matrix $G_D$ das Kronecker-Produkt $G_{D,T}$ in der zeitlichen Domäne und einer Kovarianz-Matrix $G_{D,F}$ in der Frequenzdomäne ist und der Bestimmungsschritt (28) die Teilschritte umfasst:

- Zersetzung der Kovarianz-Matrizen $G_{B,T}$ und $G_{B,F}$ in eigene Vektoren gemäß den Beziehungen $G_{B,T} = C_{B,T}\Lambda_{B,T}C_{B,T}^H$ und $G_{B,F} = C_{B,F}\Lambda_{B,F}C_{B,F}^H$, bei denen;
- $C_{B,T}$ eine Matrix aus eigenen Vektoren der Matrix $G_{B,T}$; ist
- $\Lambda_{B,T}$ eine diagonale Matrix ist, umfassend eigene Werte, die den eigenen Vektoren der Matrix $G_{B,T}$ zugeordnet sind;
- $C_{B,F}$ eine Matrix aus eigenen Vektoren der Matrix $G_{B,F}$ ist; und
- $\Lambda_{B,T}$ eine diagonale Matrix ist, umfassend eigene Werte, die den eigenen Vektoren der Matrix $G_{B,F}$ zugeordnet sind;
- Extraktion einer Matrix $C'_{B,T}$, ausgehend von der Matrix $C_{B,T}$ und einer Matrix $\Lambda'_{B,T}$ ausgehend von der Matrix $\Lambda_{B,T}$, wobei die Matrix $\Lambda'_{B,T}$ eine bestimmte Zahl $n_{Bt}'$ aus den größten eigenen Werten von $\Lambda_{B,T}$ umfasst und die Matrix $C'_{B,T}$ die eigenen Vektoren umfasst, die diesen $n_{Bt}'$ größten, eigenen Werten zugeordnet sind;
- Extraktion einer Matrix $C'_{B,F}$ ausgehend von der Matrix $C_{B,F}$ und einer Matrix $\Lambda'_{B,F}$ ausgehend von der Matrix $\Lambda_{B,F}$, wobei die Matrix $\Lambda'_{B,F}$ eine bestimmte Zahl $n_{Bf}'$ von größten eigenen Werten von $\Lambda_{B,F}$, umfasst und die Matrix $C'_{B,F}$ die eigenen Vektoren umfasst, die diesen $n_{Bf}'$ größten eigenen Werten zugeordnet sind;
- Zersetzung der Kovarianz-Matrizen $G_{D,T}$ und $G_{D,F}$ in eigene Vektoren gemäß den Beziehungen $G_{D,T} = C_{D,T}\Lambda_{D,T}C_{D,T}^H$ und $G_{D,F} = C_{D,F}\Lambda_{D,F}C_{D,F}^H$, bei denen:
- $C_{D,T}$ eine Matrix aus eigenen Vektoren der Matrix $G_{D,T}$ ist;
- $\Lambda_{D,T}$ eine diagonale Matrix ist, die eigene Werte umfasst, die den eigenen Vektoren der Matrix $G_{D,T}$ zugeordnet sind;
- $C_{D,F}$ eine Matrix aus eigenen Vektoren der Matrix $G_{D,F}$ ist; und
- $\Lambda_{D,F}$ eine diagonale Matrix ist, die eigene Werte umfasst, die den eigenen Vektoren der Matrix $G_{D,F}$ zugeordnet sind;
- Extraktion einer Matrix $C'_{D,T}$ ausgehend von der Matrix $C_{D,T}$ und einer Matrix $\Lambda'_{D,T}$ ausgehend von der Matrix $\Lambda_{D,T}$, wobei die Matrix $\Lambda'_{D,T}$ eine bestimmte Zahl $n_{Dt}'$ von größten eigenen Werten umfasst, die diesen $n_{DT}'$ größten eigenen Werten zugeordnet sind; und
- Extraktion einer Matrix $C'_{D,F}$ ausgehend von der Matrix $C_{D,F}$ und einer Matrix $\Lambda'_{D,F}$ ausgehend von der Matrix $\Lambda_{D,F}$, wobei die Matrix $\Lambda'_{D,F}$ eine bestimmte Zahl $n_{Df}'$ von größten eigenen Werten aus $\Lambda_{D,F}$ und der Matrix $C'_{D,F}$ umfasst, die die eigenen Vektoren umfassen, die diesen $n_{Df}'$ größten eigenen Werten zugeordnet sind,

wobei die Gewichtungsvektoren dann mithilfe der Matrizen von eigenen Vektoren $C'_{B,T}$, $C'_{B,F}$, $C'_{D,T}$, $C'_{D,F}$ und von eigenen Werten $\Lambda'_{B,T}$, $\Lambda'_{B,F}$, $\Lambda'_{D,T}$, $\Lambda'_{D,F}$ bestimmt sind.

7. Verfahren gemäß irgendeinem der Ansprüche 2 bis 6, **dadurch gekennzeichnet, dass** der Bestimmungsschritt des Signal-Demodulationsschritts die Teilschritte umfasst:

- Berechnung einer Kovarianz-Matrix $G_B$ des Verbreitungskanals;
- Bestimmung der Gewichtungswerte mithilfe der Kovarianz-Matrix $G_B$.

8. Verfahren gemäß Anspruch 7, bei dem der Bestimmungsschritt des Signal-Demodulationsschritts darüber hinaus einen Zersetzungs-Teilschritt der Kovarianz-Matrix $G_B$ in eigene Vektoren gemäß der Beziehung $G_B = C_B\Lambda_BC_B^H$ umfasst, bei der $C_B$ eine Matrix aus eigenen Vektoren der Matrix $G_B$ ist und $\Lambda_B$ eine diagonale Matrix ist, die eigene Werte umfasst, die den eigenen Vektoren der Matrix $G_B$ zugeordnet sind.

9. Verfahren gemäß Anspruch 8, bei dem der Bestimmungsschritt des Signal-Demodulationsschritts darüber hinaus einen Extraktions-Unterschritt einer Matrix $C'_B$ ausgehend von der Matrix $C_B$ und einer Matrix $\Lambda'_B$ ausgehend von der Matrix $\Lambda_B$ umfasst, wobei die Matrix $\Lambda'_B$ eine bestimmte Zahl $n_B'$ von eigenen Werten von $\Lambda_B$ umfasst und die Matrix $C'_B$ die eigenen Vektoren umfasst, die diesen $n'_B$ eigenen Werten zugeordnet sind, wobei die Gewichtungsvektoren dann mithilfe der Matrix aus eigenen Vektoren $C'_B$ und eigenen Werten $\Lambda'_B$ bestimmt sind.

10. Verfahren gemäß Anspruch 8, bei dem die Kovarianz-Matrix $G_B$ das Kronecker-Produkt einer Kovarianz-Matrix $G_{B,T}$ in der zeitlichen Domäne und einer Kovarianz-Matrix $G_{B,F}$ in der Frequenzdomäne ist und der Bestimmungsschritt des Signal-Demodulationsschritts die Teilschritte umfasst:

- Zersetzung der Kovarianz-Matrizen $G_{B,T}$ und $G_{B,F}$ in eigene Vektoren gemäß den Beziehungen $G_{B,T} = C_{B,T}\Lambda_{B,T}CB_{,T}^H$ und $G_{B,F} = C_{B,F}\Lambda_{B,F}C_{B,F}^H$, bei denen:
- $C_{B,T}$ eine Matrix von eigenen Vektoren der Matrix $G_{B,T}$ ist;
- $\Lambda_{B,T}$ eine diagonale Matrix ist, die eigene Werte umfasst, die den eigenen Vektoren der Matrix $G_{B,T}$ zugeordnet sind;
- $C_{B,F}$ eine Matrix aus eigenen Vektoren der Matrix $G_{B,F}$ ist;
und
- $\Lambda_{B,F}$ eine diagonale Matrix ist, die eigene Werte umfasst, die den eigenen Vektoren der Matrix $G_{B,F}$ zugeordnet sind;
- Extraktion einer Matrix $C'_{B,T}$ ausgehend von der Matrix $C_{B,T}$ und einer Matrix $\Lambda'_{B,T}$ ausgehend von der Matrix $\Lambda_{B,T}$, wobei die Matrix $\Lambda'_{B,T}$ eine bestimmte Zahl $n_{Bt}'$ von größten eigenen Werten von $\Lambda_{B,T}$ umfasst und die Matrix $C'_{B,T}$ die eigenen Vektoren umfasst, die diesen $n_{Bt}'$ größten eigenen Werten zugeordnet sind;
- Extraktion einer Matrix $C'_{B,F}$ ausgehend von der Matrix $C_{B,F}$ und einer Matrix $\Lambda'_{B,F}$ ausgehend von de Matrix $\Lambda_{B,F}$, wobei die Matrix $\Lambda'_{B,F}$ eine bestimmte Zahl $n_{Bf}'$ von größten eigenen Werten von $\Lambda_{B,F}$ umfasst und die Matrix $C'_{B,F}$ die eigenen Vektoren umfasst, die diesen $n_{Bf}'$ größten eigenen Werten zugeordnet sind,

wobei die Gewichtungsvektoren dann mithilfe der Matrizen aus eigenen Vektoren $C'_{B,T}$, $C'_{B,F}$ und eigenen Werten $\Lambda'_{B,T}$, $\Lambda'_{B,F}$ bestimmt sind.

11. Verfahren gemäß irgendeinem der voranstehenden Ansprüche, bei dem das ausgegebene Signal ein Mehrträger-Signal, insbesondere ein Signal OFDM ist.

12. Empfängerausrüstung (2), die wenigstens zwei Antennen (4, 6) umfasst, die jeweils ein Signal ($s_1$; $s_2$) empfangen, das über einen zugeordneten funkelektrischen Verbreitungskanal übertragen ist, wobei die empfangenen Signale ($s_1$; $s_2$) einem und demselben ausgegebenen Signal(s) entsprechen, das in Zeit und in Frequenz verteilte Symbolraster umfasst, in denen bestimmte Symbole, bezeichnet als Pilotsymbole, dem Empfänger bekannt sind, wobei das genannte Verfahren Mittel umfasst:

- Geräuschbereinigung (E1) zum Bilden von zwei kombinierten Signalen ($c_1$; $c_2$), deren Geräusche unabhängig sind;
- Normalisierung der Geräusche der kombinierten Signale ($c_1$; $c_2$) zum Bilden von zwei Signalen ($r'$; $r''$), deren Geräusche unabhängig sind und gleiche durchschnittliche Normen aufweisen;
- Signal-Demodulation mit maximaler Kombination des Geräuschsignal-Verhältnisses der zwei Signale mit unabhängigen Geräuschen und gleichen durchschnittlichen Normen ($r'$; $f''$),

**dadurch gekennzeichnet, dass** das Geräuschbereinigungs-Mittel zum Bilden der zwei kombinierten Signale ($c_1$; $c_2$) Mittel umfasst:

- Gewichtung jedes der empfangenen Signale ($s_1$; $s_2$) mit ersten jeweiligen Gewichtungsvektoren ($w_1$; $w_2$), die einer jeweiligen Antenne (4, 6) des Empfängers (2) zugeordnet sind;
- Kombination der empfangenen gewichteten Signale zum Bilden eines ersten kombinierten Signals ($c_1$),
- Gewichtung eines Referenzsignals (d), das die genannten Pilotsymbole mit einem anderen Gewichtsvektor ($w_d$) umfasst,
- Vergleich des ersten kombinierten Signals (c1) und des gewichteten Referenzsignals zum Bilden eines Fehlers ($\varepsilon$) und
- Bestimmung der Gewichtungsvektoren ($w_1$; $w_2$) mithilfe des Kriteriums des nachträglichen Maximums (MAP1) durch Maximieren der Realisierungswahrscheinlichkeit der genannten Gewichtungsvektoren bedingt durch den erhaltenen Fehler,
- Gewichtung jedes empfangenen Signals ($s_1$, $s_2$) mit jeweiligen zweiten Gewichtungsvektoren ($w^*_2$, $-w^*_1$), die einer jeweiligen Antenne (4, 6) des Empfängers (2), derart zugeordnet sind, dass ein Vektor ($w_1$, $w_2$), bezeichnet als erster Gewichtungsvektor, der von den ersten Gewichtungsvektoren ($w_1$, $w_2$) gebildet ist, auf jedem Symbol zum Vektor ($w'_2$, $-w^*_1$), bezeichnet als zweiter Gewichtsvektor, der durch die zweiten Gewichtungsvektoren ($w^*_2$, $-w^*_1$) gebildet ist, orthogonal ist,
- Kombination (32) der empfangenen Signale (s1, s2), die durch die zweiten Gewichtungsvektoren gewichtet sind, um ein zweites kombiniertes Signal ($c_2$) zu bilden.

**13.** Empfängerausrüstung gemäß Anspruch 12, **dadurch gekennzeichnet, dass** sie darüber hinaus Bestimmungsmittel von jeweiligen Koeffizienten ($\alpha_1$ und $\alpha_2$) des Kanals, gesehen von dem Nutzsignal, umfasst, das einer jeweiligen Antenne (4, 6) des Empfängers (2) zugeordnet ist und in dem Signal-Demodulationsschritt mit maximaler Kombination des Geräuschsignal-Verhältnisses der zwei Signale f' und r" verwendet sind, die nach Abschluss des Bereinigungsschritts des Geräuschs mithilfe des Kriteriums des nachträglichen Maximums durch Maximieren der Realisierungswahrscheinlichkeit des Kanals ($\alpha_1$ und $\alpha_2$) bedingt durch den Fehler bestimmt sind, der einerseits in dem Signal $c_1$ und andererseits in dem Signal $c_2$ vorhanden ist, indem der Verbreitungskanal, gesehen in dem Signal $c_1$ und in dem Signal $c_2$, berücksichtigt wird.

**14.** Computerprogramm, das Anweisungen für die Umsetzung des Verfahrens gemäß irgendeinem der Ansprüche 1 bis 11 umfasst, wenn das Programm durch wenigstens einen Prozessor ausgeführt ist.

**Claims**

**1.** A method for demodulating a signal in a receiver (2) comprising at least two antennas (4, 6) each receiving a signal ($s_1$; $s_2$) transmitted through an associated radio propagation channel, the received signals ($s_1$; $s_2$) corresponding to a same emitted signal (s) comprising frames of time- and frequency-divided symbols in which some symbols, called pilot symbols, are known to the receiver, said method comprising the steps of:

- noise whitening (E1) to form two combined signals ($c_1$; $c_2$) the noises of which are independent;
- normalising the noises of the combined signals ($c_1$; $c_2$) to form two signals (r'; r") the noises of which are independent and with equal average norms;
- a signal demodulation step at a maximum signal to noise ratio combination of the two signals with independent noise and equal average norms (r'; r")

**characterised in that** the first noise whitening step to form both combined signals ($c_1$; $c_2$) comprises sub-steps of:

- weighting (20) each of the received signals ($s_1$; $s_2$) with respective first weighting vectors ($w_1$; $w_2$) associated with a respective antenna (4, 6) of the receiver (2), the signal associated with the first antenna being weighted by a vector wi and the signal associated with the second antenna being weighted by a vector $w_2$,
- combining (22) the received weighted signals to form a first combined signal ($c_1$),
- weighting (24) a reference signal (d) comprising said pilot symbols with another weighting vector ($w_d$),
- comparing (26) the first combined signal ($c_1$) and the weighted reference signal to form an error ($\varepsilon$), and
- determining (28) the weighting vectors ($w_1$; $w_2$) using a maximum *a posteriori* ($MAP_1$) criterion by maximising the probability of making said weighting vectors conditionally to the error obtained,
- weighting (30) each received signal ($s_1$, $s_2$) with second weighting vectors ($w^*_2$, $-w^*_1$), the signal received on the first antenna being weighted by the conjugate of the complex vector $w_2$ and the signal received on the second antenna being weighted by the opposite of the conjugate of the complex vector wi,
- combining (32) the received signals ($s_1$, $s_2$) weighted by the second weighting vectors to form a second combined signal ($c_2$).

**2.** The method according to claim 1, **characterised in that** the respective coefficients ($\alpha_1$ and $\alpha_2$) of the channel viewed by the wanted signal associated with a respective antenna (4, 6) of the receiver (2) and used in the signal demodulation step at a maximum signal to noise ratio combination of both signals, r' and r", obtained at the end of the noise whitening step, are determined using the maximum *a posteriori* criterion by maximising the probability of making the channel ($\alpha_1$ and $\alpha_2$) conditionally to the error present on the one hand in the signal $c_1$ and on the other hand in the signal $c_2$, by taking the propagation channel viewed in the signal $c_1$ and in the signal $c_2$ into account.

**3.** The method according to claim 1 or 2, wherein the step of determining (28) the whitening step (E1) comprises sub-steps of:

- calculating a covariance matrix $G_B$ of the propagation channel;
- calculating a covariance matrix $G_D$ of the product symbol per symbol of two propagation channels; and
- determining the weighting vectors using the covariance matrices $G_B$ and $G_D$.

**4.** The method according to claim 3, wherein the step of determining (28) the whitening step (E1) further comprises a sub-step of decomposing the covariance matrix $G_B$ into eigen vectors according to the relationship $G_B = C_B \Lambda_B C_B^H$

in which $C_B$ is a matrix of eigen vectors of the matrix $G_B$ and $\Lambda_B$ is a diagonal matrix comprising eigen values associated with the eigen vectors of the matrix $G_B$ and a sub-step of decomposing the covariance matrix $G_D$ into eigen vectors according to the relationship $G_D = C_D\Lambda_D C_D{}^H$ in which $C_D$ is a matrix of eigen vectors of the matrix $G_D$ and $\Lambda_D$ is a diagonal matrix comprising eigen values associated with the eigen vectors of the matrix Go.

5. The method according to claim 4, wherein the step of determining (28) the whitening step (E1) further comprises a sub-step of extracting a matrix $C'_B$ from the matrix $C_B$ and a matrix $\Lambda'_B$ from the matrix $\Lambda_B$, the matrix $\Lambda'_B$ comprising a determined number $n_B'$ of eigen values of $\Lambda_B$ and the matrix $C'_B$ comprising the eigen vectors associated with these $n_B'$ eigen values, and a sub-step of extracting the matrix $C'_D$ from the matrix $C_D$ and a matrix $\Lambda'_D$ from the matrix $\Lambda_D$, the matrix $\Lambda'_D$ comprising a determined number $n_D'$ of eigen values of $\Lambda_D$ and the matrix $C'_D$ comprising the eigen vectors associated with these $n_D'$ eigen values, the weighting vectors being then determined using the matrices of the eigen vectors $C'_B$ and $C'_D$ and of eigen values $\Lambda'_B$ and $\Lambda'_D$.

6. The method according to claim 4, wherein the covariance matrix $G_B$ is the Kronecker product of a covariance matrix $G_{B,T}$ in the time domain and a covariance matrix $G_{B,F}$ in the frequency domain and the covariance matrix Go is the Kronecker product of a covariance matrix $G_{D,T}$ in the time domain and a covariance matrix $G_{D,F}$ in the frequency domain and the determination step (28) comprises the sub-steps of:

- decomposing the covariance matrices $G_{B,T}$ and $G_{B,F}$ into eigen vectors according to the relationships $G_{B,T} = C_{B,T}\Lambda_{B,T}C_{B,T}{}^H$ and $G_{B,F} = C_{B,F}\Lambda_{B,F}C_{B,F}{}^H$, in which:

  - $C_{B,T}$ is a matrix of eigen vectors of the matrix $G_{B,T}$;
  - $\Lambda_{B,T}$ is a diagonal matrix comprising eigen values associated with the eigen vectors of the matrix $G_{B,T}$;
  - $C_{B,F}$ is a matrix of eigen vectors of the matrix $G_{B,F}$; and
  - $\Lambda_{B,F}$ is a diagonal matrix comprising eigen values associated with the eigen vectors of the matrix $G_{B,F}$;
  - extracting a matrix $C'_{B,T}$ from the matrix $C_{B,T}$ and a matrix $\Lambda'_{B,T}$ from the matrix $\Lambda_{B,T}$, the matrix $\Lambda'_{B,T}$ comprising a determined number $n_{Bt}'$ of the greatest eigen values of $\Lambda_{B,T}$ and the matrix $C'_{B,T}$ comprising the eigen vectors associated with these $n_{Bt}'$ greatest eigen values;
  - extracting a matrix $C'_{B,F}$ from the matrix $C_{B,F}$ and a matrix $\Lambda'_{B,F}$ from the matrix $\Lambda_{B,F}$, the matrix $\Lambda'_{B,F}$ comprising a determined number $n_{Bf}'$ of the greatest eigen values of $\Lambda_{B,F}$ and the matrix $C'_{B,F}$ comprising the eigen vectors associated with these $n_{Bf}'$ greatest eigen values,
  - decomposing the covariance matrices $G_{D,T}$ and $G_{D,F}$ into eigen vectors according to the relationships $G_{D,T} = C_{D,T}\Lambda_{D,T}C_{D,T}{}^H$ and $G_{D,F} = C_{D,F}\Lambda_{D,F}C_{D,F}{}^H$, in which:

    - $C_{D,T}$ is a matrix of eigen vectors of the matrix $G_{D,T}$;
    - $\Lambda_{D,T}$ is a diagonal matrix comprising eigen values associated with the eigen vectors of the matrix $G_{D,T}$;
    - $C_{D,F}$ is a matrix of eigen vectors of the matrix $G_{D,F}$; and
    - $\Lambda_{D,F}$ is a diagonal matrix comprising eigen values associated with the eigen vectors of the matrix $G_{D,F}$;
    - extracting a matrix $C'_{D,T}$ from the matrix $C_{D,T}$ and a matrix $\Lambda'_{D,T}$ from the matrix $\Lambda_{D,T}$, the matrix $\Lambda'_{D,T}$ comprising a determined number $n_{Dt}'$ of the greatest eigen values of $\Lambda_{D,T}$ the matrix $C'_{D,T}$ comprising the eigen vectors associated with these $n_{Dt}'$ greatest eigen values; and
    - extracting a matrix $C'_{D,F}$ from the matrix $C_{D,F}$ and a matrix $\Lambda'_{D,F}$ from the matrix $\Lambda_{D,F}$, the matrix $\Lambda'_{D,F}$ comprising a determined number $n_{Df}'$ of the greatest eigen values of $\Lambda_{D,F}$ and the matrix $C'_{D,F}$ comprising the eigen vectors associated with these $n_{Df}'$ greatest eigen values,

the weighting vectors being then determined using the matrices of eigen vectors $C'_{B,T}$, $C'_{B,F}$, $C'_{D,T}$, $C'_{D,F}$ and of eigen values $\Lambda'_{B,T}$, $\Lambda'_{B,F}$, $\Lambda'_{D,T}$, $\Lambda'_{D,F}$.

7. The method according to any of claims 2 to 6, **characterised in that** the step of determining the signal demodulation step comprises the sub-steps of:

- calculating a covariance matrix $G_B$ of the propagation channel;
- determining the weighting vectors using the covariance matrix $G_B$.

8. The method according to claim 7, wherein the step of determining the signal demodulation step further comprises a sub-step of decomposing the covariance matrix $G_B$ into eigen vectors according to the relationship $G_B = C_B\Lambda_B C_B{}^H$ in which $C_B$ is a matrix of eigen vectors of the matrix $G_B$ and $\Lambda_B$ is a diagonal matrix comprising eigen values associated with the eigen vectors of the matrix $G_B$.

9. The method according to claim 8, wherein the step of determining the signal demodulation step further comprises a sub-step of extracting a matrix $C'_B$ from the matrix $C_B$ and a matrix $\Lambda'_B$ from the matrix $\Lambda_B$, the matrix $\Lambda'_B$ comprising a determined number $n_B'$ of eigen values of $\Lambda_B$ and the matrix $C'_B$ comprising the eigen vectors associated with these $n_B'$ eigen values, the weighting vectors being then determined using the matrix of eigen vectors $C'_B$ and of eigen values $\Lambda'_B$.

10. The method according to claim 8, wherein the covariance matrix $G_B$ is the Kronecker product of a covariance matrix $G_{B,T}$ in the time domain and a covariance matrix $G_{B,F}$ in the frequency domain and the step of determining the signal demodulation step comprises sub-steps of:

- decomposing the covariance matrices $G_{B,T}$ and $G_{B,F}$ into eigen vectors according to the relationships $G_{B,T} = C_{B,T}\Lambda_{B,T}C_{B,T}^H$ and $G_{B,F} = C_{B,F}\Lambda_{B,F}C_{B,F}^H$, in which:

    - $C_{B,T}$ is a matrix of eigen vectors of the matrix $G_{B,T}$;
    - $\Lambda_{B,T}$ is a diagonal matrix comprising eigen values associated with the eigen vectors of the matrix $G_{B,T}$;
    - $C_{B,F}$ is a matrix of eigen vectors of the matrix $G_{B,F}$; and
    - $\Lambda_{B,F}$ is a diagonal matrix comprising eigen values associated with the eigen vectors of the matrix $G_{B,F}$;
    - extracting a matrix $C'_{B,T}$ from the matrix $C_{B,T}$ and a matrix $\Lambda'_{B,T}$ from the matrix $\Lambda_{B,T}$, the matrix $\Lambda'_{B,T}$ comprising a determined number $n_{Bt}'$ of the greatest eigen values of $\Lambda_{B,T}$ and the matrix $C'_{B,T}$ comprising the eigen vectors associated with these $n_{Bt}'$ greatest eigen values;
    - extracting a matrix $C'_{B,F}$ from the matrix $C_{B,F}$ and a matrix $\Lambda'_{B,F}$ from the matrix $\Lambda_{B,F}$, the matrix $\Lambda'_{B,F}$ comprising a determined number $n_{Bf}'$ of the greatest eigen values of $\Lambda_{B,F}$ and the matrix $C'_{B,F}$ comprising the eigen vectors associated with these $n_{Bf}'$ greatest eigen values,

the weighting vectors being then determined using the matrices of eigen vectors $C'_{B,T}$, $C'_{B,F}$, and of eigen values $\Lambda'_{B,T}$, $\Lambda'_{B,F}$.

11. The method according to any of the preceding claims, wherein the emitted signal is a multicarrier signal, in particular an OFDM signal.

12. A receiver equipment (2) comprising at least two antennas (4, 6) each receiving a signal ($s_1$; $s_2$) transmitted through an associated radio propagation channel, the received signals ($s_1$; $s_2$) corresponding to a same emitted signal (s) comprising frames of time- and frequency-divided symbols in which some symbols, called pilot symbols, are known to the receiver, said method comprising means for:

- noise whitening (E1) to form two combined signals ($c_1$; $c_2$) the noises of which are independent;
- normalising the noises of the combined signals ($c_1$; $c_2$) to form two signals (r'; r") the noises of which are independent and with equal average norms;
- signal demodulation at a maximum signal to noise ratio combination of both signals with independent noises and equal average norms (r'; r")

**characterised in that** the noise whitening means to form both combined signals ($c_1$; $c_2$) comprises means for:

- weighting each of the received signals ($s_1$; $s_2$) with respective first weighting vectors ($w_1$; $w_2$) associated with a respective antenna (4, 6) of the receiver (2),
- combining the received weighted signals to form a first combined signal ($c_1$),
- weighting a reference signal (d) comprising said pilot symbols with another weighting vector ($w_d$),
- comparing the first combined signal ($c_1$) and the weighted reference signal to form an error ($\varepsilon$), and
- determining the weighting vectors ($w_1$; $w_2$) using the maximum a *posteriori* ($MAP_1$) criterion by maximising the probability of making said weighting vectors conditionally to the error obtained,
- weighting each received signal ($s_1$, $s_2$) with respective second weighting vectors ($w^*_2$, $-w^*_1$) associated with a respective antenna (4, 6) of the receiver (2) such that a vector ($w_1$, $w_2$), called a first weighting vector, formed by the first weighting vectors ($w_1$, $w_2$) is orthogonal on each symbol to the vector ($w^*_2$, $-w^*_1$), called a second weighting vector, formed by the second weighting vectors ($w^*_2$, $-w^*_1$),
- combining (32) the received signals ($s_1$, $s_2$) weighted by the second weighting vectors to form a second combined signal ($c_2$).

13. The receiver equipment according to claim 12, **characterised in that** it further comprises means for determining

respective coefficients ($\alpha_1$ and $\alpha_2$) of the channel viewed by the wanted signal associated with a respective antenna (4, 6) of the receiver (2) and used in the signal demodulation step with a maximum signal to noise ratio combination of both signals, r' and r", obtained at the end of the noise whitening step, are determined using the maximum *a posteriori* criterion by maximising the probability of making the channel ($\alpha_1$ and $\alpha_2$) conditionally to the error present on the one hand in the signal $c_1$ and on the other hand in the signal $c_2$, by taking the propagation channel viewed in the signal $c_1$ and in the signal $c_2$ into account.

**14.** A computer program comprising instructions for implementing the method according to any of claims 1 to 11 when the program is executed by at least one processor.

FIG. 1

FIG. 2

## FIG. 3

$$\boxed{\begin{matrix} w_1 \\ w_2 \end{matrix}} \quad 20$$

$$\boxed{w_1\,s_1\ +\ w_2\,s_2} \quad 22$$

$$\boxed{w_d.d} \quad 24$$

$$\boxed{w_1\,s_1\ +\ w_2\,s_2\ -\ w_d.d} \quad 26$$

$$\boxed{MAP_1 \rightarrow w_1, w_2, w_d} \quad 28$$

$$\boxed{\begin{matrix} w_2^* \\ -w_1^* \end{matrix}} \quad 30$$

$$\boxed{w_2^*\,s_1 - w_1^*\,s_2\ -\ w_d.d} \quad 32$$

$E_1$

FIG. 4

$$w_1$$
$$w_2$$ — 40

$$w_1\,s_1 + w_2\,s_2$$ — 42

$$w_d = w_1\,\alpha_1 + w_2\,\alpha_2$$ — 44

$$w_1\,s_1 + w_2\,s_2 - w_d.d$$ — 46

$$\text{MAP}_2 \rightarrow \alpha_1, \alpha_2$$ — 48

# FIG. 5

**EP 2 959 610 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1161062
- FR 2924884